# EUROPEAN PATENT APPLICATION

(11) **EP 4 021 053 A1**
(43) Date of publication of application: **29.06.2022**
(21) Application number: 20854215.9
(22) Date of filing: 06.08.2020
(51) Int. Cl.: H04W 16/14, H04W 72/04, H04W 48/16, H04W 84/12

(54) **WIRELESS COMMUNICATION DEVICE AND METHOD, AND PROGRAM**

(30) Priority: 19.08.2019 JP 2019149772
(71) Applicant: Sony Group Corporation, Tokyo 108-0075 (JP)
(72) Inventor: SUGAYA Shigeru, Tokyo 108-0075 (JP)
(74) Representative: D Young & Co LLP
(86) International application number: PCT/JP2020/030117
(87) International publication number: WO 2021/033555

(57) **Abstract**

The present technology relates to a wireless communication device and method, and a program capable of performing communication with higher efficiency. A wireless communication device includes a first transmission unit configured to transmit signals using frequency channels of a freely available non-limited frequency band, a second transmission unit configured to transmit signals using frequency channels of a limited frequency band that is limited in use, and a control unit configured to control operations of the first transmission unit and the second transmission unit such that wireless communication is performed within a predetermined operation bandwidth by using frequency channels of the non-limited frequency band and frequency channels of the limited frequency band in combination. The present technology can be applied to wireless LAN systems.

## Description

### [Technical Field]

The present technology relates to a wireless communication device and method, and a program, and particularly, to a wireless communication device and method, and a program capable of performing communication with higher efficiency.

### [Background Art]

For example, in a conventional wireless local area network (LAN) system, consecutive frequency channels are prepared and communication at a higher speed is performed by bundling a plurality of these frequency channels. That is, since a plurality of consecutively arranged frequency channels are secured, transmission/reception circuits and the like can be efficiently used and effective wireless communication can be performed.

Specifically, a technology of setting a conventional 20 MHz bandwidth as one frequency channel and consecutively using 40 MHz corresponding to two channels, 80 MHz corresponding to four channels, or 160 MHz corresponding to eight channels is disclosed.

Furthermore, when a continuous frequency channel of 160 MHz is not available, if two frequency channels of 80 MHz can be used, only these two frequency channels are allowed to be used in a bundle.

Currently, as a method for performing communication at a higher speed for future extension, a method for efficiently performing communication using 320 MHz corresponding to 16 channels is being studied.

Furthermore, although new frequency bands may be available for wireless LAN systems in addition to currently available frequency bands, only some frequency bands may be available.

That is, in a newly released frequency band, an existing system is present as a primary service system, and thus it is necessary to use a wireless LAN system depending on an area or a time zone that is not operated in the primary service.

In such a case, a method in which a wireless communication device actually operates in a frequency band when it accesses a database of a server that manages frequency resources, checks the position and current time information of the wireless communication device, and can confirm that the frequency band is available for the position and time is conceived.

Further, for example, a technology in which a host device detects a frequency band that is not used by another device for communication in frequency bands that can be used by the host device for transmission, generates a transmission signal by dividing and arranging frequency components of a signal to be transmitted, and transmits the transmission signal has also been proposed (refer to PTL 1, for example).

### [Citation List]

### [Patent Literature]

[PTL 1]
JP 2015-76752 A

### [Summary]

### [Technical Problem]

However, in the above-described technology, if consecutive frequency channels of 40 MHz corresponding to two channels, 80 MHz corresponding to four channels, or 160 MHz corresponding to eight channels when the conventionally standardized bandwidth of 20 MHz is set as one frequency channel cannot be used, communication using a plurality of frequency channels which are bundled cannot be performed.

In addition, although it is conceived that two 80 MHz frequency bands each corresponding to four channels are permitted to be used in combination, it is desirable that frequency channels be able to be used consecutively when utilization efficiency is considered.

Therefore, even if a new frequency band becomes available, it is difficult to use it for communication at a higher speed using a bandwidth of 320 MHz, for example, unless frequency channels are consecutively secured as in the conventional technology.

In addition, while specifically 5.925 GHz to 7.125 GHz can be used among new frequency bands, a bandwidth of 100 MHz of 6.425 GHz to 6.525 GHz and a bandwidth of 250 MHz of 6.875 GHz to 7.125 GHz may be permitted to be used if a primary service system is not present.

However, in such a case, it is difficult to consecutively secure a bandwidth corresponding to 320 MHz, and even if the bandwidth is permitted to be equally divided into two frequency bands and used, two consecutive 160 MHz bandwidths must be prepared.

On the other hand, other bandwidths of 500 MHz of 5.925 GHz to 6.425 GHz and 350 MHz of 6.525 GHz to 6.875 GHz may be permitted to be used only for a place and time that are not used by a primary service system.

That is, when a wireless LAN system is operated using this frequency band, it becomes necessary to access a data server via another communication network, which may impair the convenience of the wireless LAN system.

Further, in the communication device described in PTL 1, a signal is transmitted after being divided into frequency components that are not detected as used frequency components at a timing when the signal is intended to be transmitted. Accordingly, if there is no signal detection from a primary service system temporarily, a case in which the signal is transmitted at that timing may occur.

Furthermore, since frequency channel bands to be used are specified according to the generation of wireless LAN systems, for example, use in a 2.4 GHz band and use in a 5 GHz band have the above-mentioned configurations.

That is, wireless LAN systems have a configuration in which it is difficult to bond frequency channels across different frequency channel bands in order to secure compatibility with conventional systems.

The present technology in view of such circumstances enables more efficient communication.

### [Solution to Problem]

A wireless communication device of one aspect of the present technology includes a first transmission unit configured to transmit signals using frequency channels of a freely available non-limited frequency band, a second transmission unit configured to transmit signals using frequency channels of a limited frequency band that is limited in use, and a control unit configured to control operations of the first transmission unit and the second transmission unit such that wireless communication is performed within a predetermined operation bandwidth by using frequency channels of the non-limited frequency band and frequency channels of the limited frequency band in combination.

A wireless communication method or a program of one aspect of the present technology is a wireless communication method or a program of a wireless communication device including a first transmission unit configured to transmit signals using frequency channels of a freely available non-limited frequency band and a second transmission unit configured to transmit signals using frequency channels of a limited frequency band that is limited in use, and includes a step of controlling operations of the first transmission unit and the second transmission unit such that wireless communication is performed within a predetermined operation bandwidth by using frequency channels of the non-limited frequency band and frequency channels of the limited frequency band in combination.

In one aspect of the present technology, in a wireless communication device including a first transmission unit configured to transmit signals using frequency channels of a freely available non-limited frequency band and a second transmission unit configured to transmit signals using frequency channels of a limited frequency band that is limited in use, operations of the first transmission unit and the second transmission unit are controlled such that wireless communication is performed within a predetermined operation bandwidth by using frequency channels of the non-limited frequency band and frequency channels of the limited frequency band in combination.

### [Brief Description of Drawings]

[Fig. 1]

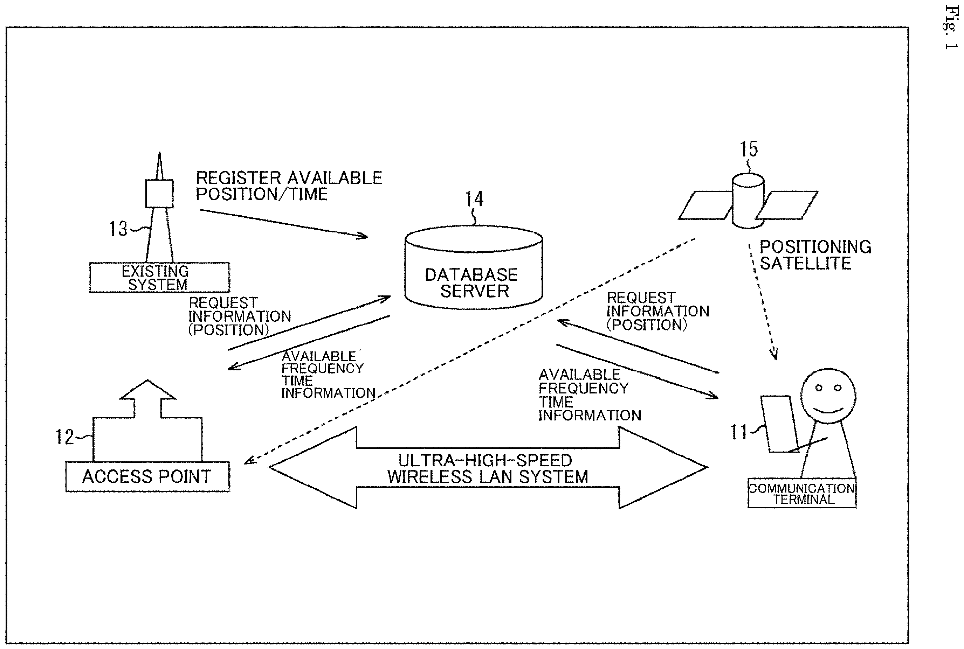

   Fig. 1 is a diagram showing an example of a network configuration of a communication system.
[Fig. 2]

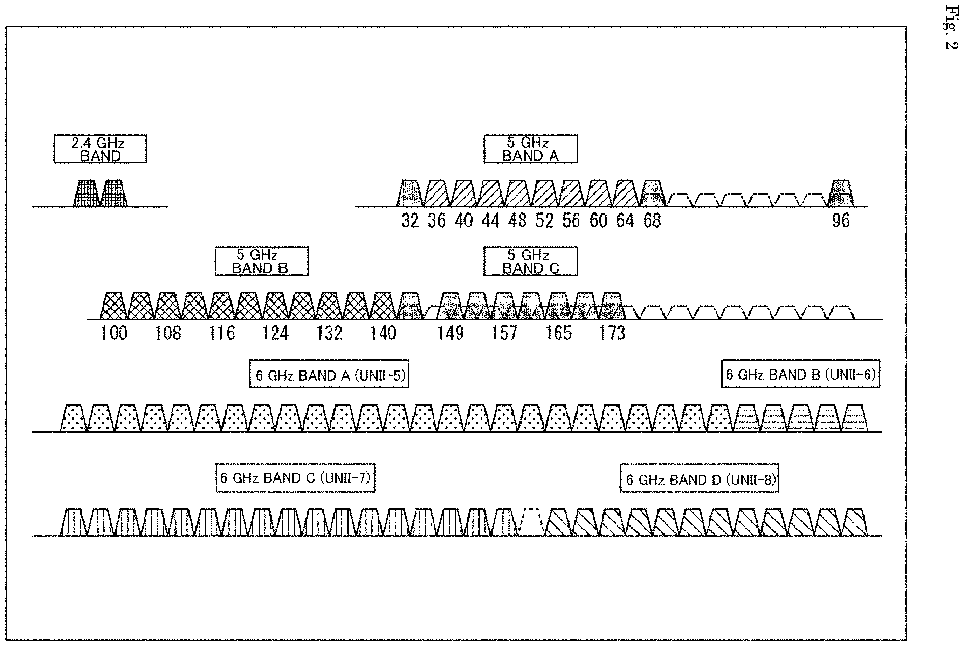

   Fig. 2 is a diagram showing an example of allocation of frequency bands and frequency channels.
[Fig. 3]

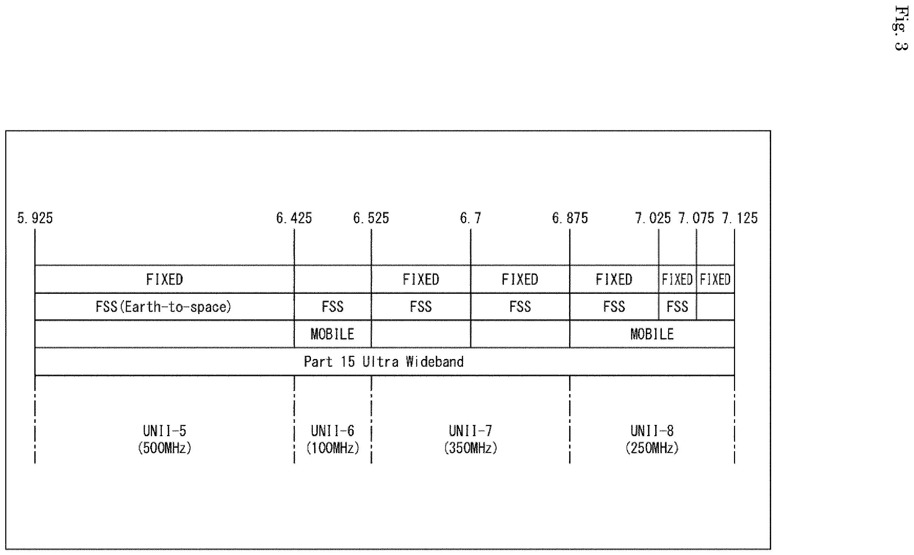

   Fig. 3 is a diagram illustrating usage conditions of a wireless communication system in the United States.
[Fig. 4]

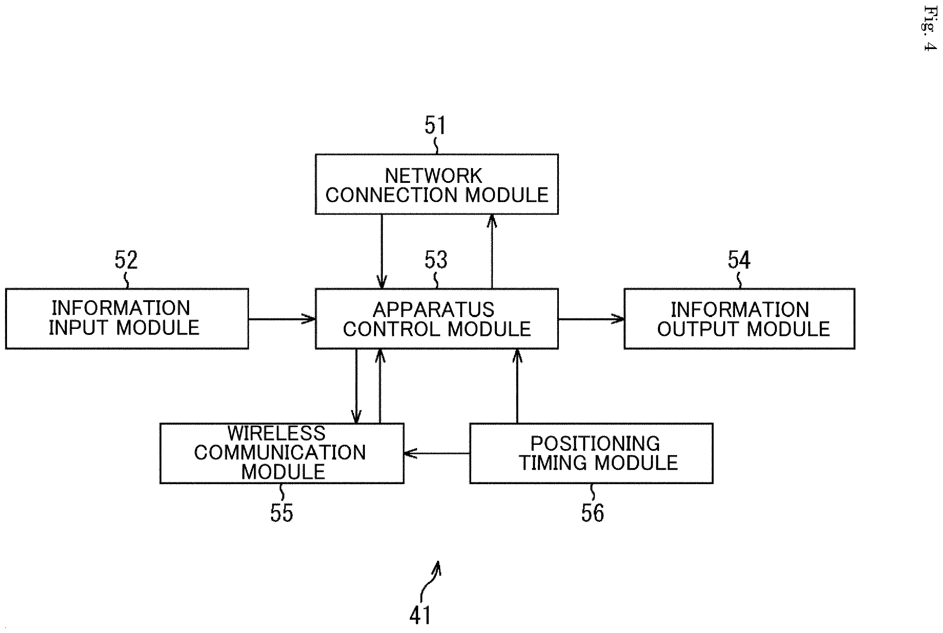

   Fig. 4 is a diagram showing an example of a configuration of a wireless communication device.
[Fig. 5]

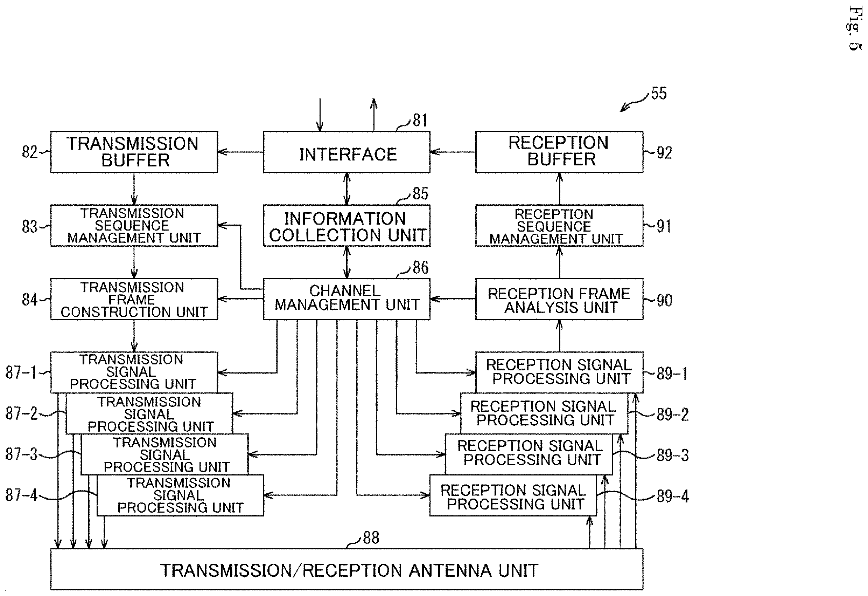

   Fig. 5 is a diagram showing an example of a configuration of a wireless communication module.
[Fig. 6]

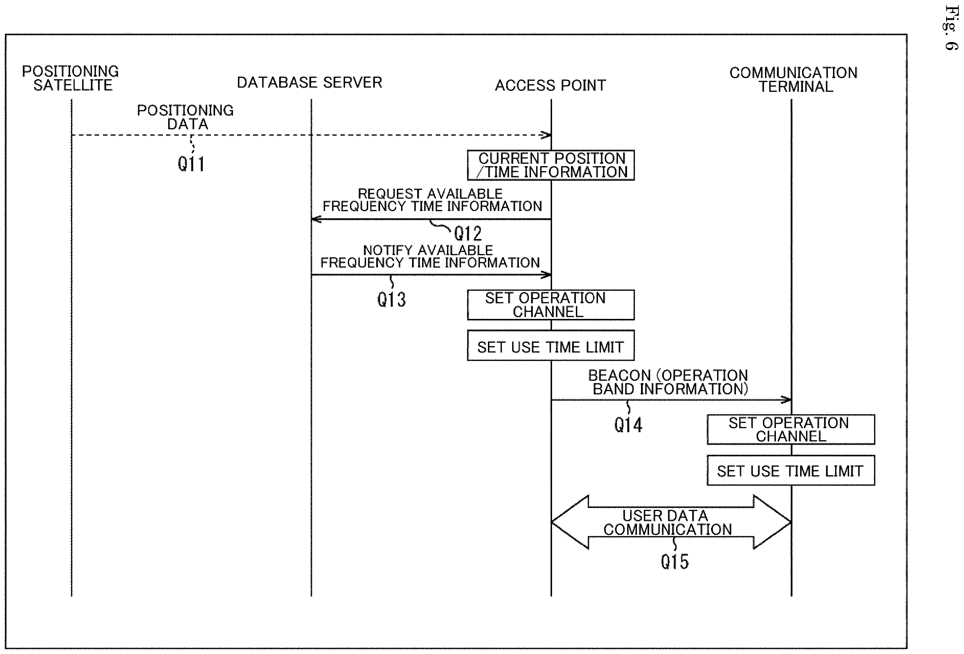

   Fig. 6 is a diagram illustrating a communication sequence executed by a wireless communication device.
[Fig. 7]

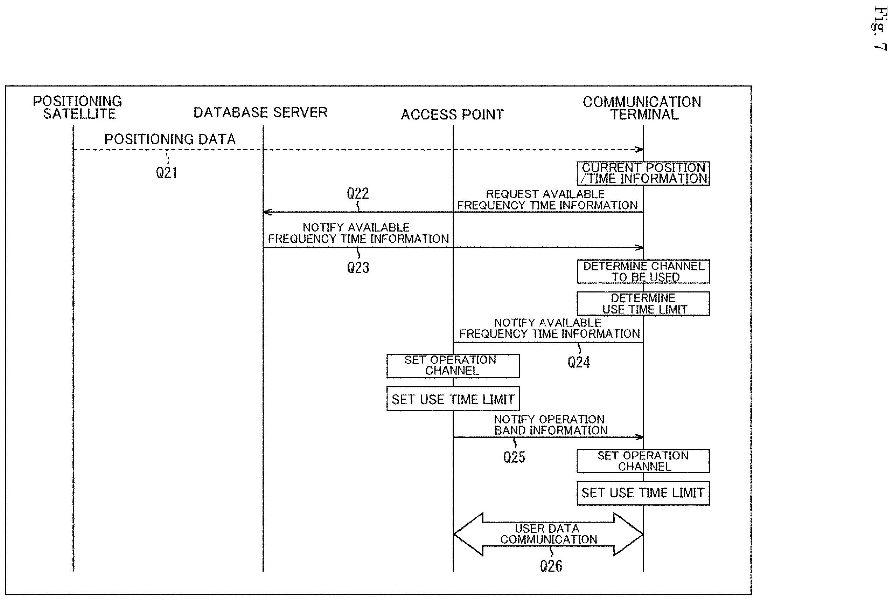

   Fig. 7 is a diagram illustrating the communication sequence executed by the wireless communication device.
[Fig. 8]

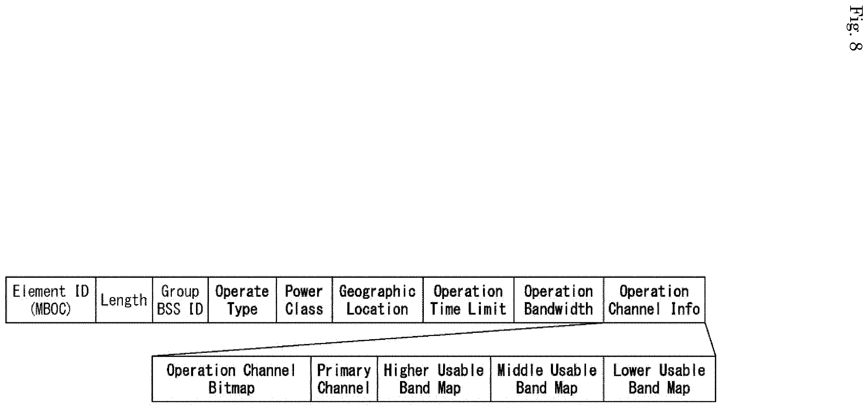

   Fig. 8 is a diagram showing an example of a configuration of information elements of operation band information.
[Fig. 9]

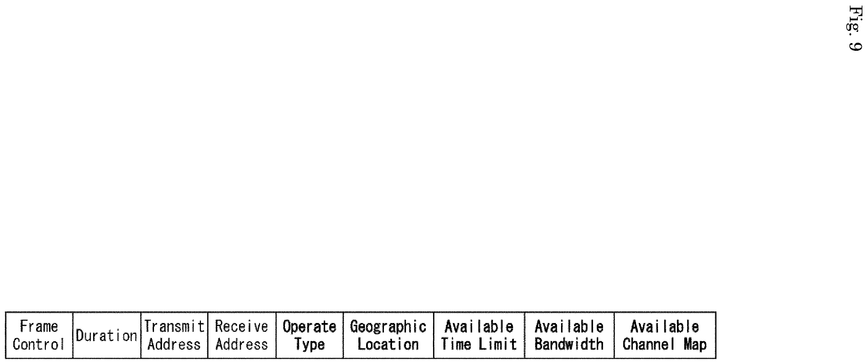

   Fig. 9 is a diagram showing an example of a configuration of an available frequency time information frame.
[Fig. 10]

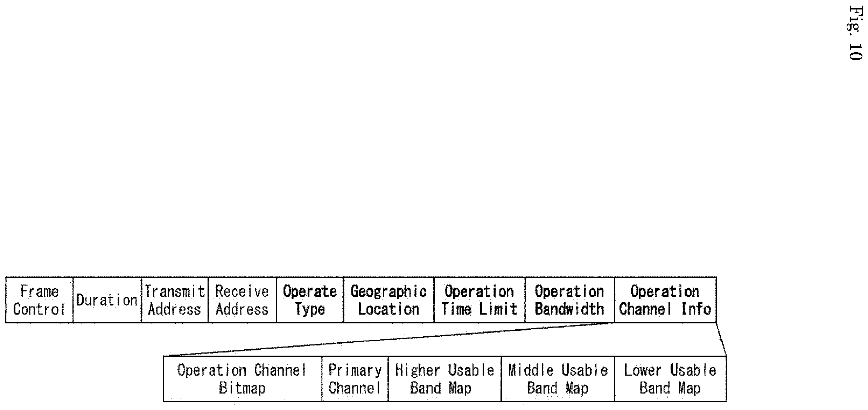

   Fig. 10 is a diagram showing an example of a configuration of a notification frame for notifying of operation band information.
[Fig. 11]

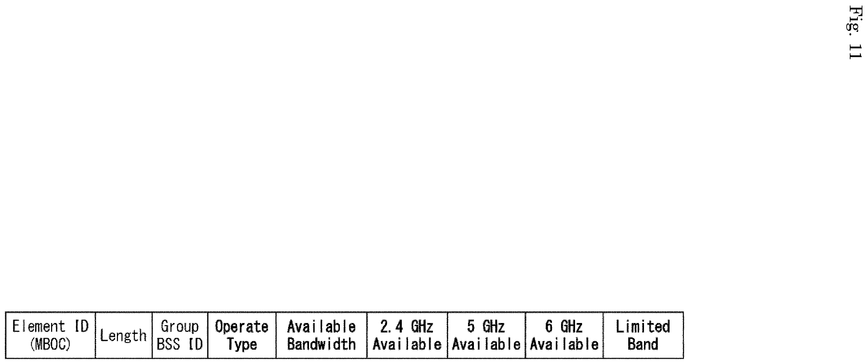

   Fig. 11 is a diagram showing an example of a configuration of information elements of operable bandwidth information.
[Fig. 12]

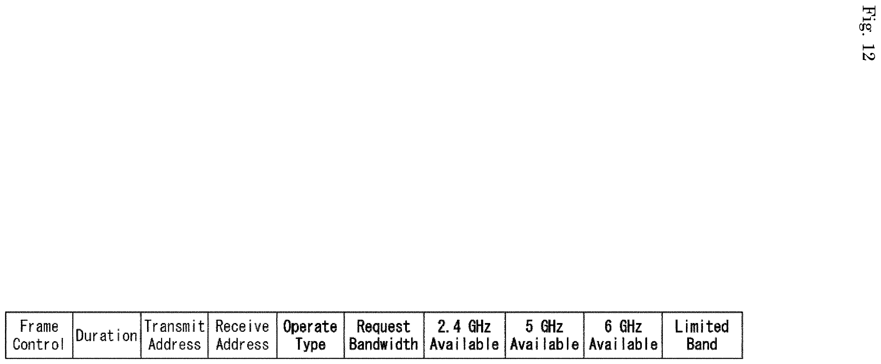

   Fig. 12 is a diagram showing an example of a configuration of a bandwidth increase request frame.
[Fig. 13]

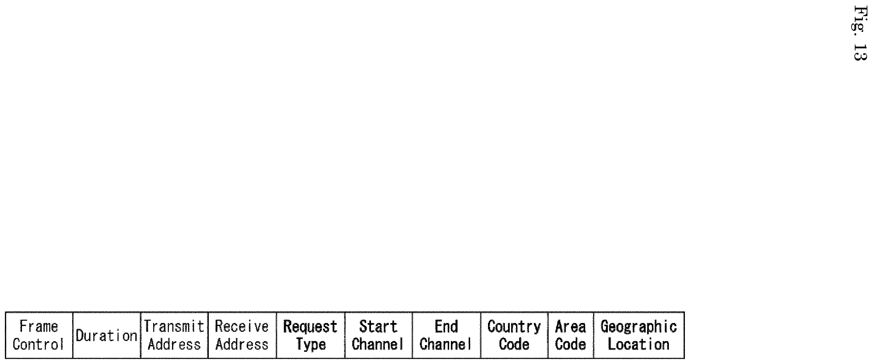

   Fig. 13 is a diagram showing an example of a configuration of an available frequency time information request.
[Fig. 14]

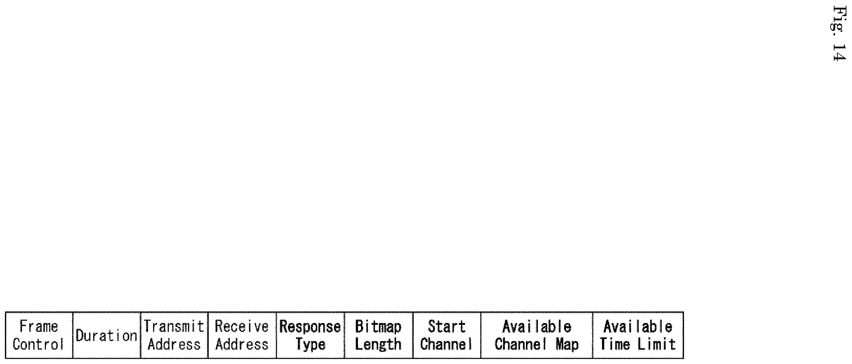

   Fig. 14 is a diagram showing an example of a configuration of available frequency time information.
[Fig. 15]

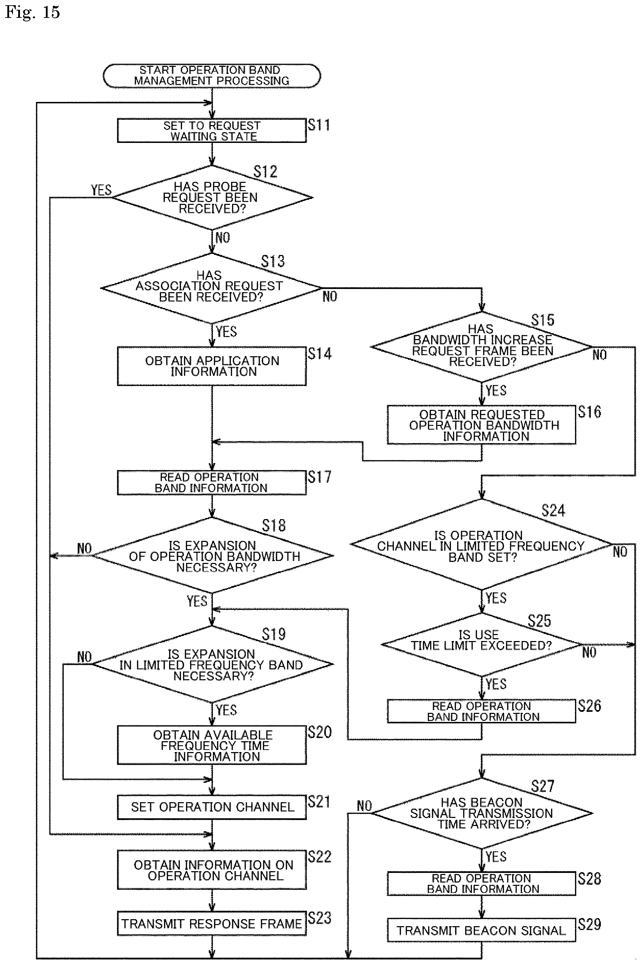

   Fig. 15 is a flowchart illustrating operation band management processing.
[Fig. 16]

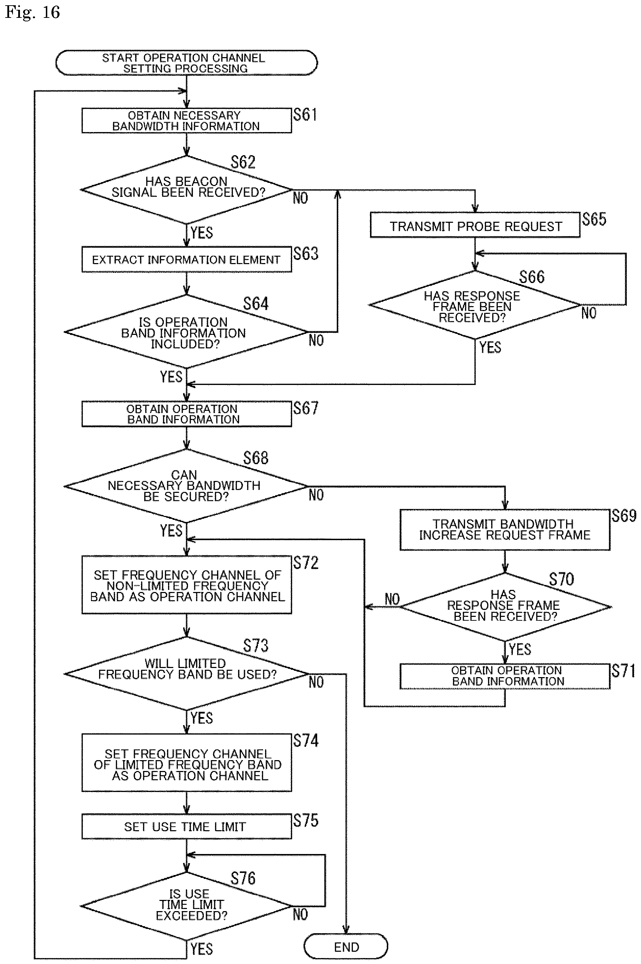

   Fig. 16 is a flowchart illustrating operation channel setting processing.
[Fig. 17]

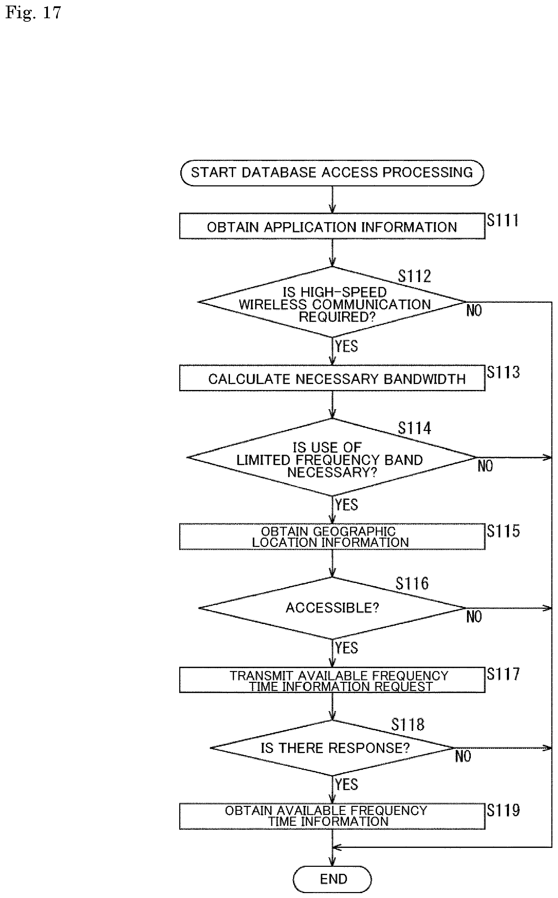

   Fig. 17 is a flowchart illustrating database access processing.
[Fig. 18]

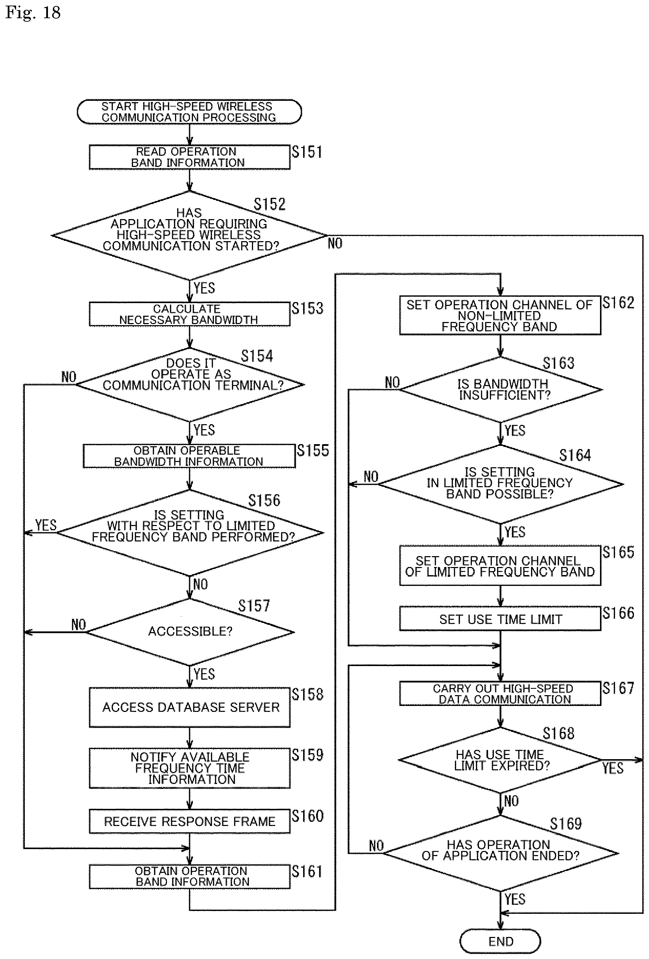

   Fig. 18 is a flowchart illustrating high-speed wireless communication processing.
[Fig. 19]

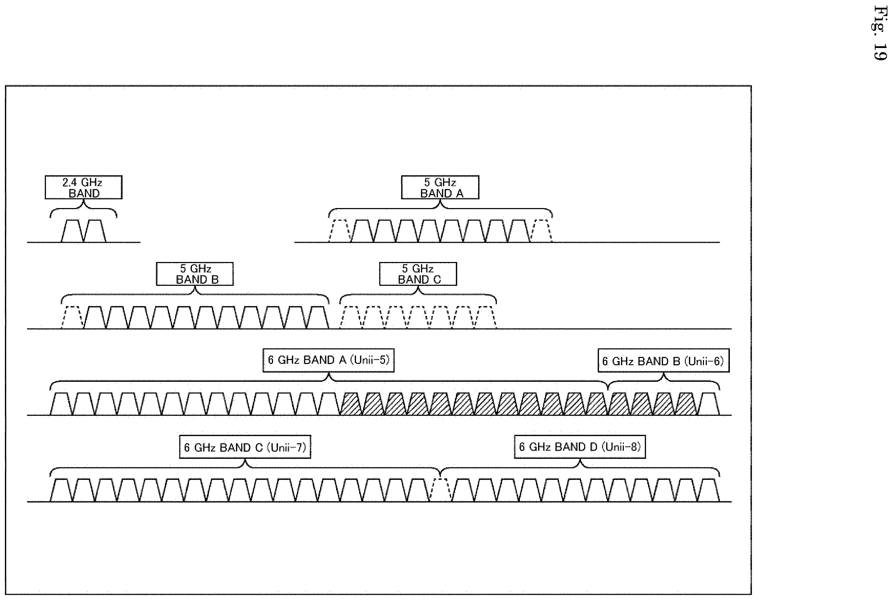

   Fig. 19 is a diagram showing an example of allocation of operation channels.
[Fig. 20]

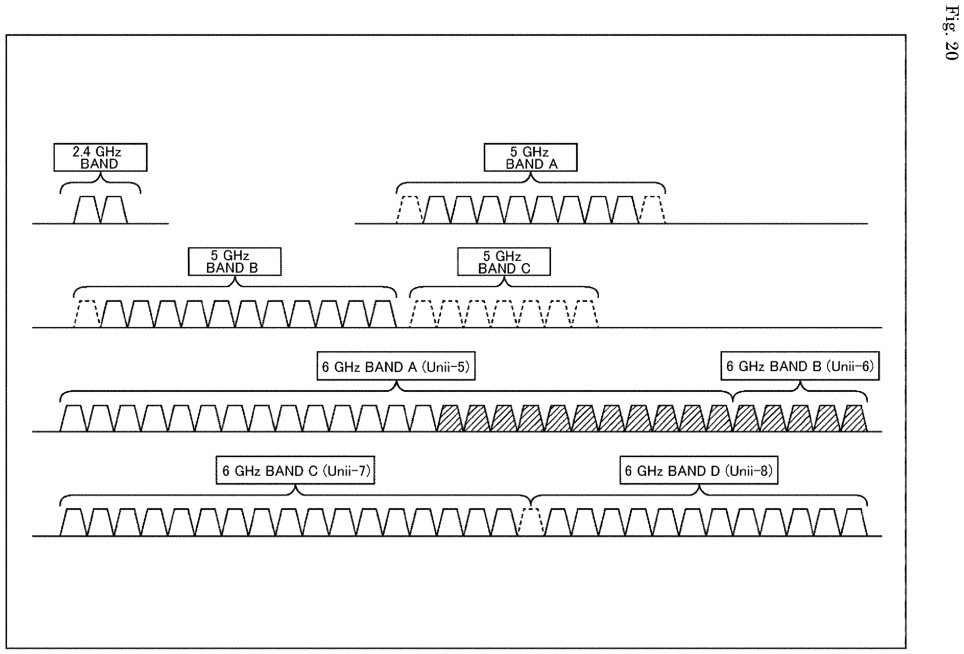

   Fig. 20 is a diagram showing an example of allocation of operation channels.
[Fig. 21]

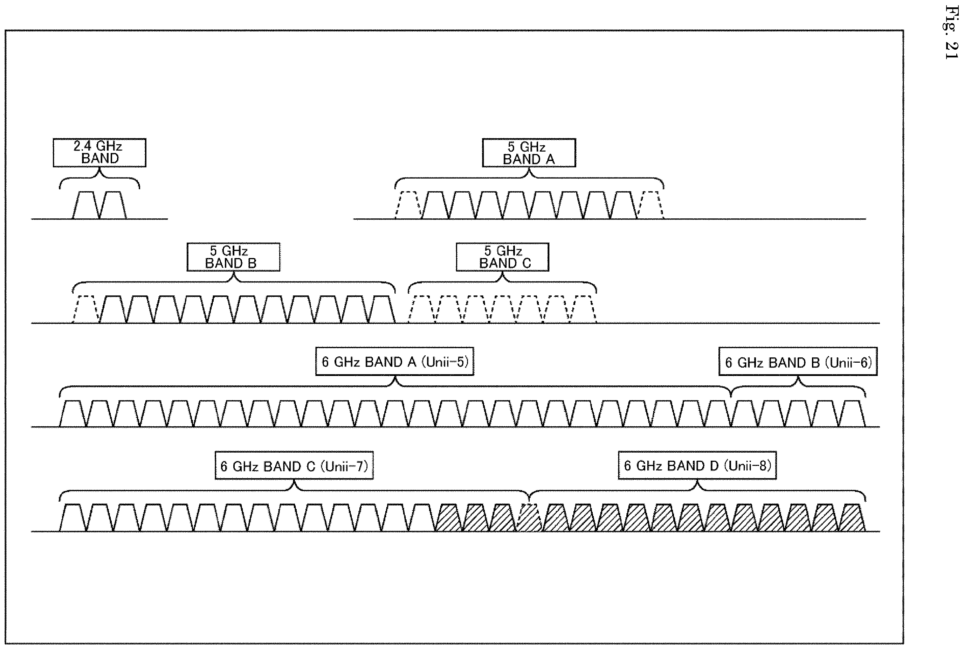

   Fig. 21 is a diagram showing an example of allocation of operation channels.
[Fig. 22]

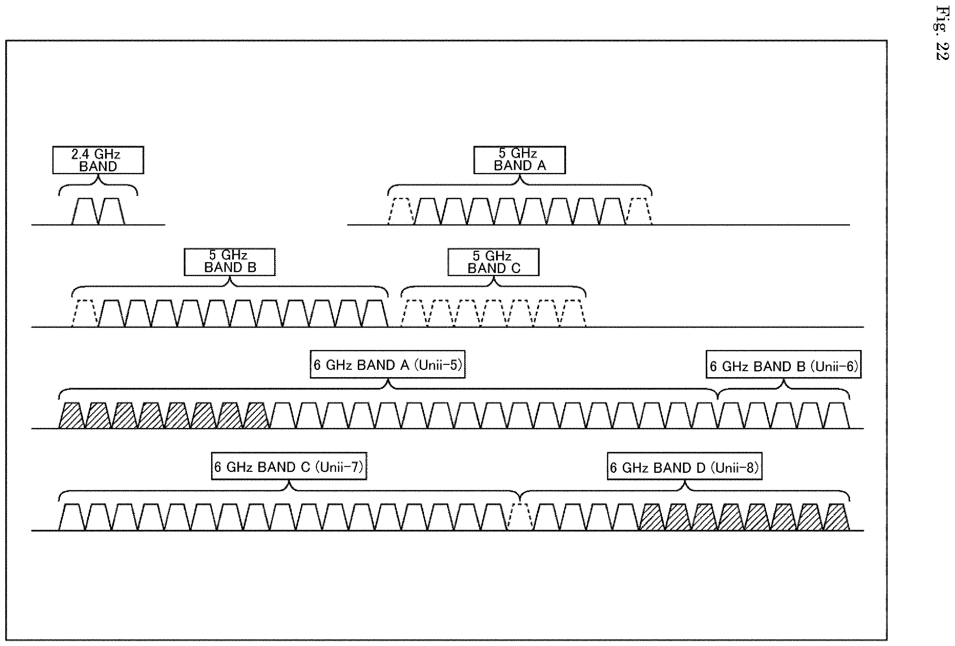

   Fig. 22 is a diagram showing an example of allocation of operation channels.
[Fig. 23]

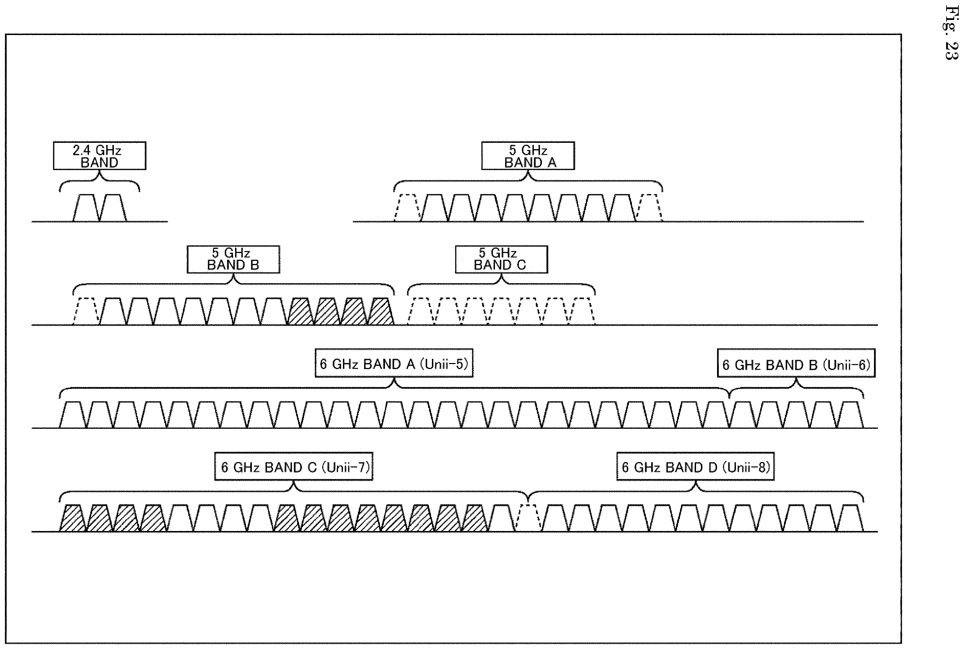

   Fig. 23 is a diagram showing an example of allocation of operation channels.
[Fig. 24]

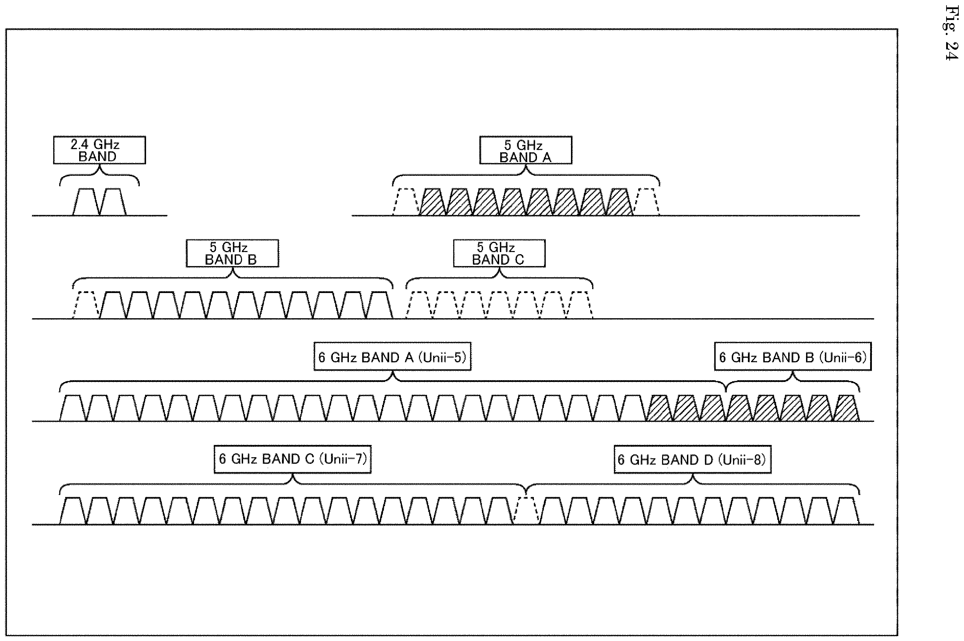

   Fig. 24 is a diagram showing an example of allocation of operation channels.
[Fig. 25]

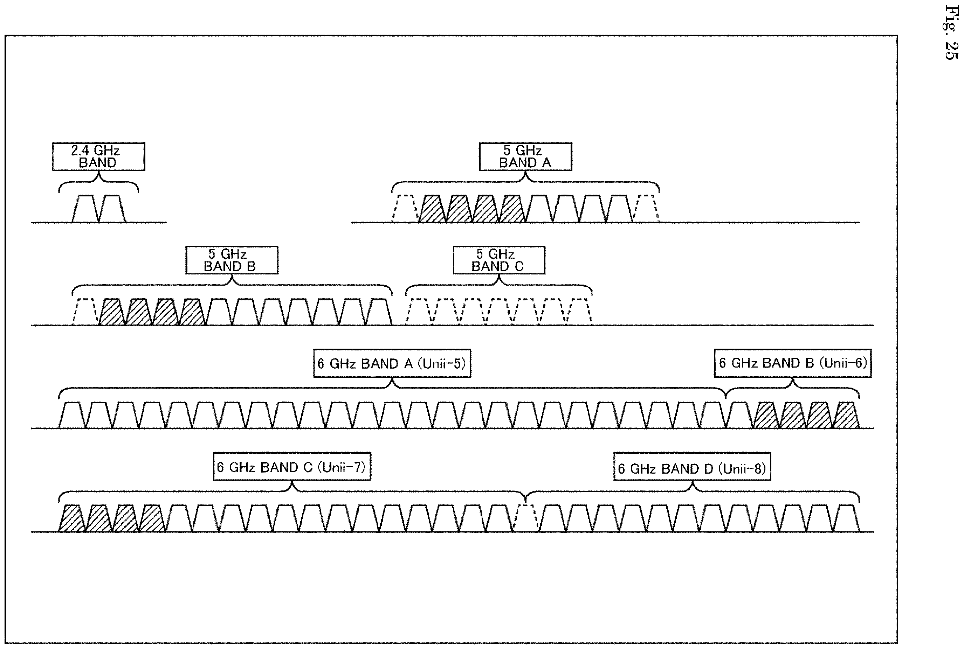

   Fig. 25 is a diagram showing an example of allocation of operation channels.
[Fig. 26]

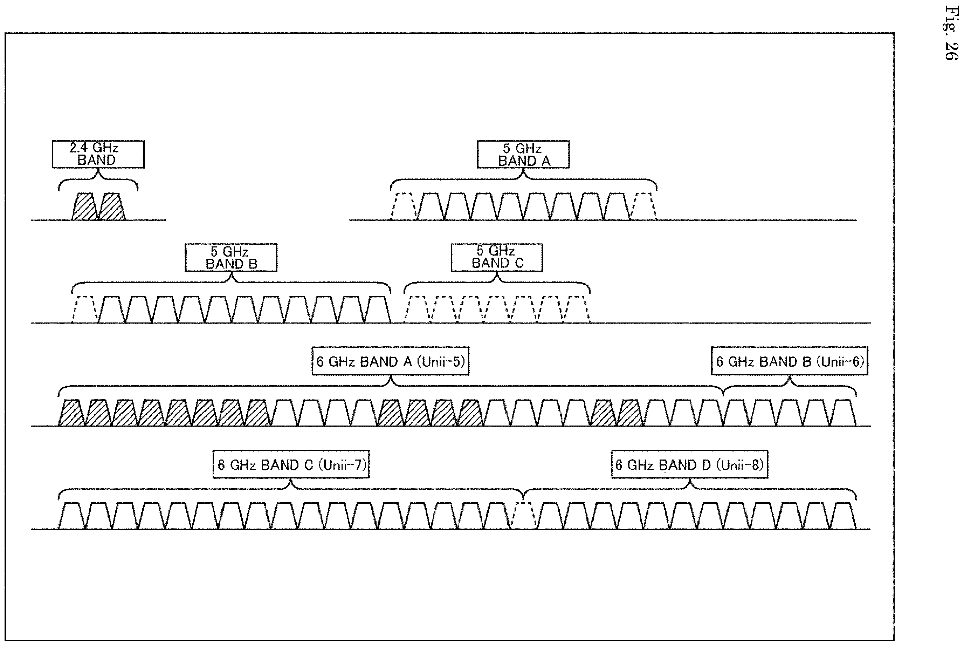

   Fig. 26 is a diagram showing an example of allocation of operation channels.
[Fig. 27]

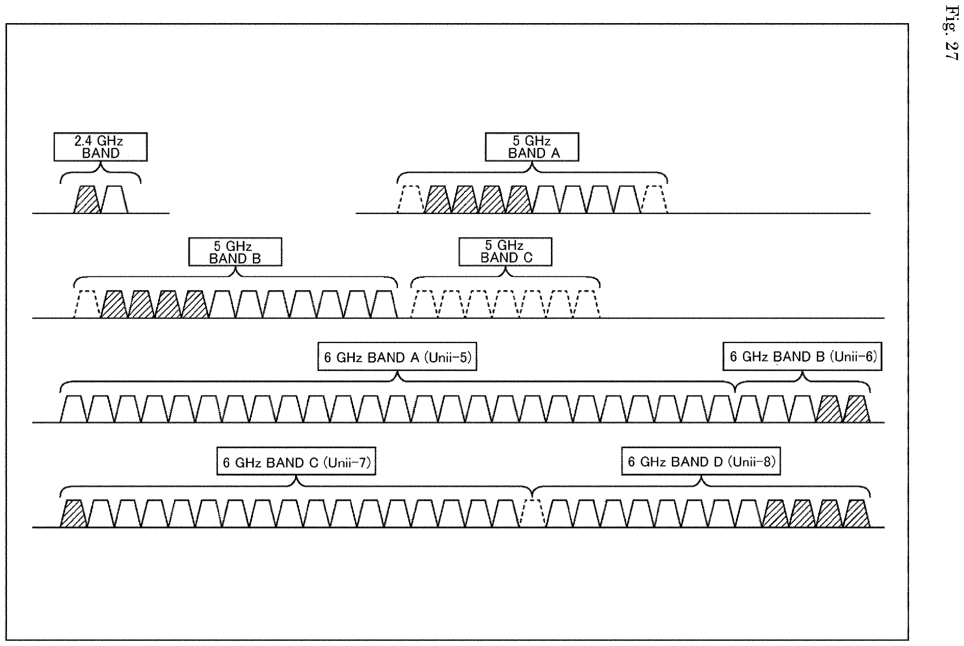

   Fig. 27 is a diagram showing an example of allocation of operation channels.
[Fig. 28]

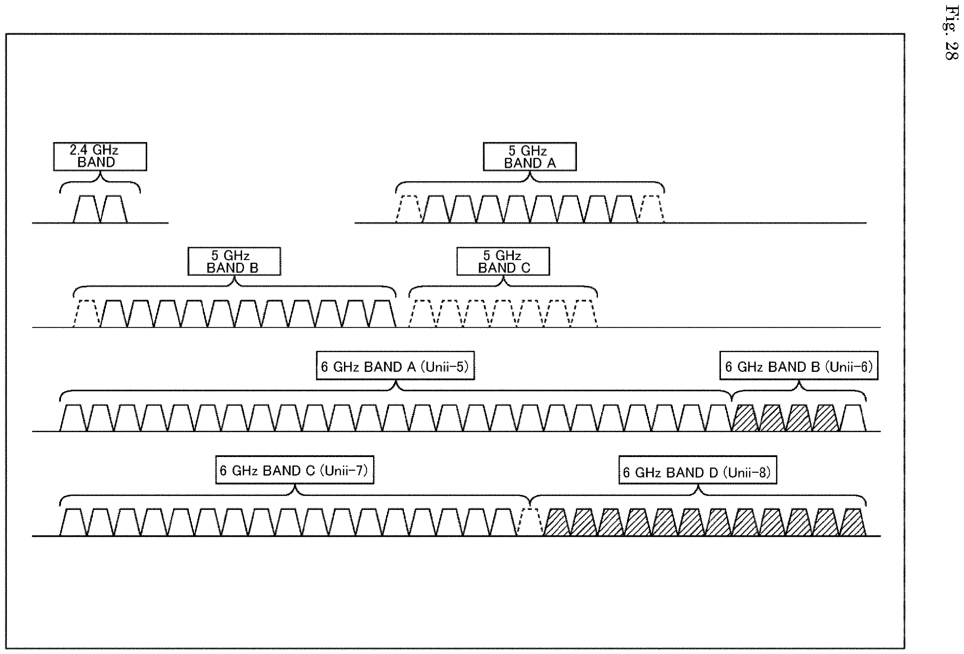

   Fig. 28 is a diagram showing an example of allocation of operation channels.
[Fig. 29]

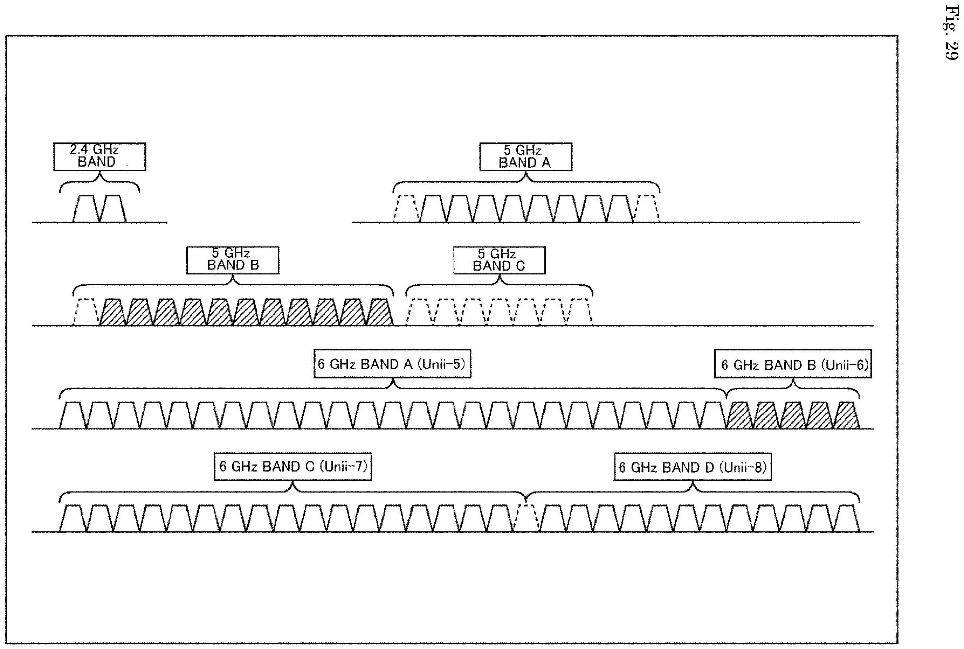

   Fig. 29 is a diagram showing an example of allocation of operation channels.
[Fig. 30]

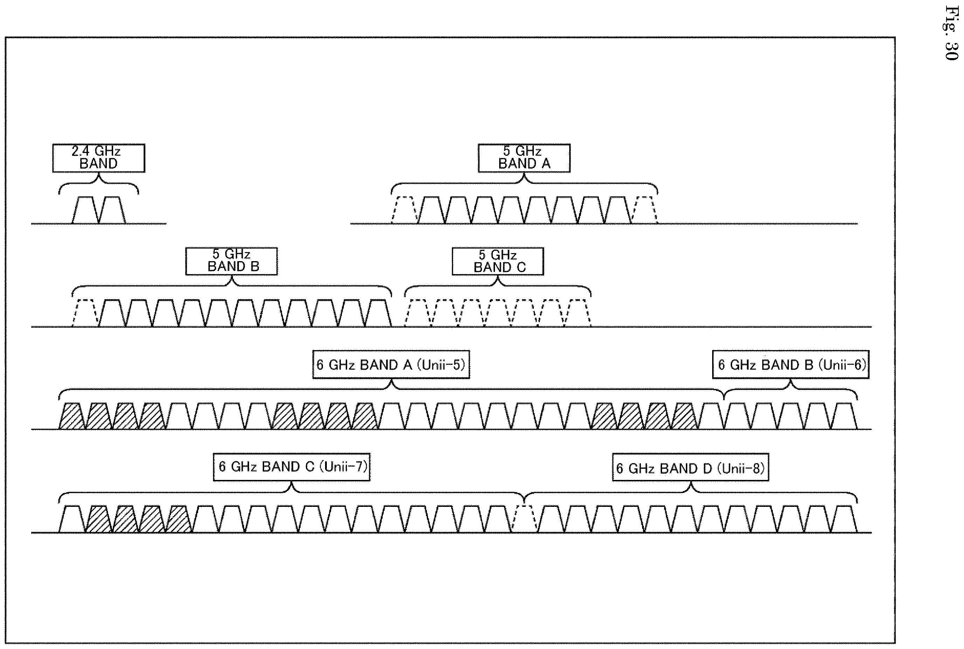

   Fig. 30 is a diagram showing an example of allocation of operation channels.
[Fig. 31]

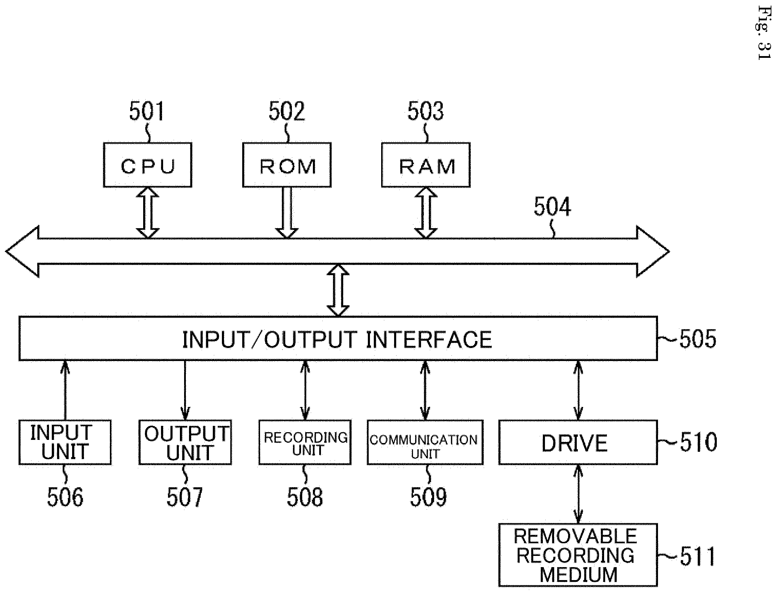

   Fig. 31 is a diagram illustrating an example of a configuration of a computer.

### [Description of Embodiments]

Hereinafter, embodiments to which the present technology is applied will be described with reference to the drawings.

### <First embodiment>

### <Present technology>

The present technology enables more efficient communication by bundling arbitrary frequency channels even when desired bandwidths cannot be consecutively secured.

In a wireless communication device to which the present technology is applied, communication is performed by bundling arbitrary frequency channels such that a desired bandwidth such as 320 MHz, for example, is obtained by combining first frequency channels that can be freely used without restrictions and second frequency channels that are limited by the position of the device and time among frequency bands that can be used in a wireless LAN system.

In this case, for example, the availability of the second frequency channels limited by the position of the wireless communication device and time is ascertained in advance by accessing a predetermined server and neighboring access points are notified of the available frequency and time. Accordingly, an existing access point can use the second frequency channels without accessing the server.

In this manner, the present technology secures a desired bandwidth by combining some frequency channels of a first frequency band that can be freely used and some frequency channels of a second frequency band limited by the position of a device and the time when an existing system is present and operating the combined frequency channels.

That is, even if a bandwidth that is a power of 2 times 20 MHz corresponding to a basic bandwidth cannot be secured, for example, a desired bandwidth such as 320 MHz can be secured by bundling arbitrary frequency channels of the first frequency band that can be freely used and arbitrary frequency channels of the second frequency band that is limited by position and time. Here, the first frequency band is an existing frequency band and the second frequency band is a newly available frequency band or the like, for example.

In this way, when an existing system is used or use of a frequency band and the like is limited, it is possible to secure a desired bandwidth (320 MHz) by bundling and using only a plurality of available frequency channels even if a plurality of consecutively arranged frequency channels cannot be used. Accordingly, it is possible to improve utilization efficiency of frequency channels.

For example, it is possible to combine and use some frequency bands limited by legislation of each country by providing a first communication unit that operates in a frequency band that can be freely used for a wireless communication device and a second communication unit that operates in a frequency band that is used by inquiring about the availability thereof to the outside, and bundling a plurality of frequency channels such that a predetermined bandwidth is obtained.

Further, in the present technology, in order to secure a desired bandwidth such as 320 MHz, a frequency band is used after being divided into asymmetric bandwidths of 240 MHz and 80 MHz such that the desired bandwidth of 320 MHz, for example, is obtained. In other words, communication is performed using a plurality of frequency bands having different bandwidths.

In this way, it is possible to use only frequency channels that are permitted to be used without accessing a database server, for example.

Further, in this case, by describing information indicating a desired bandwidth (320 MHz) or the like to be used by an access point in a predetermined information element according to determination of the access point, a communication terminal can realize a communication method that coexists with a primary service system without obtaining frequency channel information on a newly available frequency band.

In addition, any communication terminal that starts an application that requires communication at a higher speed may access a database server to determine the availability of the second frequency band limited by the position of the device and time and to obtain information on available frequencies and notify an existing access point of the information on the available frequencies.

Accordingly, the neighboring access points that have been notified of the information on the available frequencies can also combine and operate frequency channels to be actually used among available frequency bands on the basis of this information.

In addition, information on a frequency channel having a desired bandwidth to be used in a host wireless LAN system may be described in a predetermined information element, and a communication terminal may be notified of the information through a beacon signal of an access point, or the like. Accordingly, the communication terminal can realize a communication method that coexists with a primary service system without acquiring frequency channel information of a newly available frequency band.

In addition, it is possible to simultaneously notify of information on the existing 2.4 GHz band and 5 GHz band, and a new 6 GHz band by describing information on a plurality of different frequency bands as information on a frequency channel having a desired bandwidth, and it is possible to realize desired signal transmission using all the bands.

The number of divided frequency bands used for communication is not limited to two, and any frequency channel may be used.

In this way, even if there are a plurality of frequency channels used in the primary service system, it is possible to secure a necessary bandwidth using only available frequency channels and construct a wireless network.

Similarly, it is possible to realize a communication method that uses frequency channels while avoiding frequency channels used in other adjacent wireless networks and maximize frequency utilization efficiency.

### <Example of network configuration>

Hereinafter, the present technology will be described in more detail.

Fig. 1 is a diagram showing an example of a network configuration of a communication system using the present technology.

In the example shown in Fig. 1, wireless communication is performed between a communication terminal 11 of a user, which is a station, and an access point 12 according to an ultra-high-speed wireless LAN system.

In this case, the communication terminal 11 or the access point 12 collects information necessary to perform communication while coexisting with an existing system 13 that is a primary service system in a newly available frequency band as necessary.

That is, the communication terminal 11 and the access point 12 access a database server 14 and acquire available frequency time information.

The available frequency time information is information indicating whether or not a newly available frequency band can be used at the position of each device such as the communication terminal 11 or the access point 12.

For example, the available frequency time information may include information indicating an available frequency (frequency channel) and an available time zone of the newly available frequency band.

Here, the communication terminal 11 and the access point 12 transmit geographic location information indicating their current positions to the database server 14 and receive available frequency time information transmitted from the database server 14 as a response to the transmission.

Communication between the communication terminal 11 or the access point 12 and the database server 14 may be performed using a communication network such as the Internet or may be performed using a wireless LAN. Further, the communication terminal 11 or the access point 12 may access the database server 14 according to a user instruction or the like.

A wireless communication method using available frequency time information is generally known as a cognitive wireless system.

The cognitive wireless system is configured such that an existing system is regarded as a primary service, the primary service can preferentially use a frequency band, and other systems are permitted to use the frequency band in a time zone or a geographical range (position) that is not used for the primary service.

Accordingly, the access point 12 and the communication terminal 11 of the wireless LAN system present as a secondary service system are configured to access the database server 14 to determine whether or not a frequency band can be used on the basis of geographic location information indicating their current positions.

That is, the communication terminal 11 and the access point 12 acquire geographic location information by receiving, for example, signals or the like from a positioning satellite 15, and the like, and transmit the geographic location information to the database server 14 to obtain available frequency time information.

When the available frequency time information is acquired in this manner, frequency channels required for communication are set in a frequency band available for the wireless LAN system on the basis of the available frequency time information, and the frequency channels are used as needed in the wireless LAN system.

For example, frequency bands and frequency channels used in such a wireless LAN system (wireless communication system) are allocated as shown in Fig. 2.

That is, Fig. 2 shows a state of allocation of frequency bands and frequency channels available for the wireless LAN system.

In the figure, a part that protrudes upward represents one frequency channel with a bandwidth of 20 MHz, and the horizontal direction indicates frequency.

Further, a character indicated on the lower side in the figure of each frequency channel part represents a channel number of a frequency channel, and in the following, a frequency channel having a channel number of n (where n is an integer) is referred to as a channel n.

First, at least two frequency channels are set in a 2.4 GHz band when it is applied to an orthogonal frequency division multiplexing (OFDM) wireless signal with a bandwidth of 20 MHz in the Institute of Electrical and Electronics Engineers (IEEE) 802.11g standard.

In addition, in a 5 GHz band, a plurality of frequency channels to be applied to OFDM wireless signals with a bandwidth of 20 MHz can be secured because of standards such as IEEE802.11a.

However, in operating this frequency band, an available frequency range, transmission power, conditions for determining whether or not transmission is possible, and the like are specified by the legal system of each country.

For example, in Japan, it is possible to use 8 channels from channel 36 to channel 64 and 11 channels from channel 100 to channel 140.

In other countries and regions, channel 32, channel 68, channel 96, and channel 144 can also be used, and channels 149 to 173 can be used in an even higher frequency band.

Furthermore, with respect to a method of using a frequency band in a 6 GHz band, which is currently being standardized for use, it is possible to arrange 25 channels in a UNII-5 band of 6 GHz band A, 5 channels in a UNII-6 band of 6 GHz band B, 17 channels in a UNII-7 band of 6 GHz band C, and 12 channels in a UNII-8 band of 6 GHz band D.

Here, conditions for using frequencies in a primary service wireless communication system in the United States will be described with reference to Fig. 3. In the figure, the horizontal direction indicates frequency.

The figure shows that fixed operation communication (FIXED), satellite communication from Earth to space (FSS (Earth-to-space)), mobile communication (MOBILE), ultra wideband communication (Part 15 Ultra Wideband), etc. are present as primary services.

In addition, for these primary services, different bands are operated in the UNII-5 band of 6 GHz band A, the UNII-6 band of 6 GHz band B, the UNII-7 band of 6 GHz band C, and the UNII-8 band of 6 GHz band D, and more detailed operation is performed in the UNII-8 band of 6 GHz band D.

Accordingly, it is assumed that the UNII-6 band of 6 GHz band B and the UNII-8 band of 6 GHz band D can be relatively freely used by other systems.

On the other hand, it is assumed that the UNII-5 band of 6 GHz band A and the UNII-7 band of 6 GHz band C are permitted to be operated by other systems only at a position and time at which primary service systems do not operate the bands.

That is, to operate UNII-5 band and UNII-7 band, it is assumed that it is necessary to access a predetermined database server through a cognitive wireless system and to determine whether or not the bands can be operated.

Therefore, in the example shown in Fig. 2, for example, the 2.4 GHz band, the 5 GHz band, the UNII-6 band, and the UNII-8 band are frequency bands (frequency channels) that can be freely used without restriction for a wireless LAN system.

On the other hand, the UNII-5 band and the UNII-7 band are frequency bands (frequency channels) limited by a position and a time zone of a device for a wireless LAN system.

In the following, a frequency band that can be freely used by a wireless LAN system without restrictions is also referred to as a non-limited frequency band, and a frequency band that has existing primary services and is limited in use depending on a position and a time zone of a device is also referred to as a limited frequency band.

As described above, frequencies with different operation methods are mixed in a frequency band at present, which hinders operation of new frequency channels.

### <Example of configuration of wireless communication device>

Next, a configuration of a wireless communication device to which the present technology is applied will be described.

Fig. 4 is a diagram showing an example of a configuration of a wireless communication device to which the present technology is applied.

The wireless communication device 41 shown in Fig. 4 corresponds to the communication terminal 11 and the access point 12 shown in Fig. 1. That is, the wireless communication device 41 serves as both an access point and a station (STA) constituting a wireless LAN system.

The wireless communication device 41 includes a network connection module 51, an information input module 52, an apparatus control module 53, an information output module 54, a wireless communication module 55, and a positioning timing module 56.

Here, an example in which the network connection module 51 to the positioning timing module 56 are provided in the wireless communication device 41 will be described.

However, the wireless communication device 41 may be provided with necessary components among the network connection module 51 to the positioning timing module 56, and unnecessary components among the modules may be provided in a simplified manner.

The network connection module 51 serves as a communication modem or the like for connection to the Internet, for example, in a case where the wireless communication device 41 operates as an access point, and the like, and connects to the Internet via a public communication line and an Internet service provider.

The network connection module 51 supplies data received via the Internet to the apparatus control module 53 and transmits data supplied from the apparatus control module 53 to a communication partner via the Internet.

The information input module 52 includes, for example, a button, a switch, a touch panel, a mouse, a keyboard, a microphone for acquiring instructions from a user according to voice recognition, and the like.

The information input module 52 supplies, for example, a signal corresponding to an instruction input according to a user operation to the apparatus control module 53.

The apparatus control module 53 controls the overall operation of the wireless communication device 41 in response to a signal or the like supplied from the information input module 52 and causes the wireless communication device 41 to serve as a device intended by the user, that is, an access point or a station.

The information output module 54 includes, for example, a display element such as a light emitting diode (LED) display unit, a liquid crystal display panel, an organic electroluminescence (EL) display, a speaker that outputs voice or music, and the like.

For example, the information output module 54 displays (notifies of) information necessary for the user by displaying an operating state of the wireless communication device 41 and various types of information obtained via the Internet under the control of the apparatus control module 53.

The wireless communication module 55 operates as a communication module for the wireless communication device 41 to perform wireless communication.

That is, the wireless communication module 55 transmits data supplied from the apparatus control module 53 using a frame in a predetermined format through wireless communication or receives a signal transmitted through wireless communication and supplies data extracted from the received signal to the apparatus control module 53.

The positioning timing module 56 serves as a reception module that acquires geographic location information indicating the position of the wireless communication device 41 at the current time or acquires current time information indicating the current time, for example, by receiving signals transmitted from a positioning satellite.

### <Example of configuration of wireless communication module>

In addition, the wireless communication module 55 may be configured as shown in Fig. 5, for example.

That is, the wireless communication module 55 includes an interface 81, a transmission buffer 82, a transmission sequence management unit 83, a transmission frame construction unit 84, an information collection unit 85, a channel management unit 86, transmission signal processing units 87-1 to 87-4, a transmission/reception antenna unit 88, reception signal processing units 89-1 to 89-4, a reception frame analysis unit 90, a reception sequence management unit 91, and a reception buffer 92.

In particular, the interface 81 to the transmission frame construction unit 84 and the transmission signal processing units 87-1 to 87-4 are provided as blocks on a transmission side in this example.

Further, the interface 81 and the reception signal processing units 89-1 to the reception buffer 92 are provided as blocks on a reception side.

Hereinafter, the transmission signal processing units 87-1 to 87-4 are simply referred to as a transmission signal processing unit 87 when it is not necessary to particularly distinguish the transmission signal processing units 87-1 to 87-4.

Similarly, the reception signal processing units 89-1 to 89-4 are simply referred to hereinafter as a reception signal processing unit 89 when it is not necessary to particularly distinguish the reception signal processing units 89-1 to 89-4.

Although an example in which four transmission signal processing units 87 and four reception signal processing units 89 are provided will be described here, any number of transmission signal processing units 87 and reception signal processing units 89 may be provided.

The interface 81 appropriately exchanges information with other modules constituting the wireless communication device 41 via the apparatus control module 53.

That is, the interface 81 supplies various types of data supplied from the apparatus control module 53 to the transmission buffer 82 and the information collection unit 85 and supplies data supplied from the reception buffer 92 and the information collection unit 85 to the apparatus control module 53.

The transmission buffer 82 temporarily holds transmission data supplied from the interface 81 and supplies the held transmission data to the transmission sequence management unit 83.

Here, transmission data is, for example, user data stored in a MAC protocol data unit (MPDU) of a transmission frame transmitted from the transmission/reception antenna unit 88 to a wireless communication partner, and a sequence number is assigned to each piece of transmission data.

The transmission sequence management unit 83 receives supply of necessary information from the channel management unit 86 and manages transmission data sequence supplied from the transmission buffer 82.

That is, the transmission sequence management unit 83 determines a sequence number of transmission data to be transmitted and a frequency channel on which the transmission data will be transmitted on the basis of information supplied from the channel management unit 86 and supplies sequence management information indicating a determination result and the transmission data to the transmission frame construction unit 84.

The transmission frame construction unit 84 constructs (generates) a transmission frame in which the transmission data is stored on the basis of the sequence management information and the transmission data supplied from the transmission sequence management unit 83, and information supplied from the channel management unit 86 and supplies the transmission frame to the transmission signal processing unit 87.

The information collection unit 85 acquires (collects) geographic location information and current time information from the positioning timing module 56 via the interface 81 and supplies the acquired information to the channel management unit 86.

Further, the information collection unit 85 acquires available frequency time information by supplying the geographic location information to the network connection module 51 via the interface 81 and the apparatus control module 53 and causing the geographic location information to be transmitted to the database server 14 and supplies the available frequency time information to the channel management unit 86.

The channel management unit 86 manages frequency bands and frequency channels used by the wireless communication device 41, supplies information necessary for the transmission sequence management unit 83, the transmission frame construction unit 84, the transmission signal processing unit 87, and the reception signal processing unit 89, and controls the operation of each unit.

In other words, the channel management unit 86 serves as a control unit that controls wireless communication between the wireless communication device 41 and other devices, such as transmission of a transmission frame by the transmission signal processing unit 87 and reception of a reception frame by the reception signal processing unit 89.

In this case, for example, the bandwidth of a frequency band actually used for wireless communication can be different in a non-limited frequency band and a limited frequency band.

Management of frequency bands and frequency channels performed by the channel management unit 86 is performed on the basis of, for example, geographic location information, current time information, and available frequency time information supplied from the information collection unit 85, information supplied from the reception frame analysis unit 90, and the like.

The transmission signal processing units 87-1 to 87-4 perform modulation processing and signal processing on the transmission frame supplied from the transmission frame construction unit 84 under the control of the channel management unit 86 and supply a signal obtained as a result of processing to the transmission/reception antenna unit 88.

That is, the transmission signal processing units 87-1 to 87-4 serve as transmission units that transmit a transmission frame on a predetermined frequency channel in a non-limited frequency band or a limited frequency band through the transmission/reception antenna unit 88.

For example, each transmission signal processing unit 87 may be configured to be able to transmit a transmission frame from the transmission/reception antenna unit 88 using arbitrary frequency channels in a non-limited frequency band and a limited frequency band. That is, each transmission signal processing unit 87 may be configured to be able to handle all frequency bands (frequency channels).

Further, each of the transmission signal processing units 87 may be configured to be able to transmit a transmission frame from the transmission/reception antenna unit 88 using only each of different frequency channels in a non-limited frequency band or a limited frequency band.

That is, although one transmission signal processing unit 87 handles only some non-limited frequency bands and limited frequency bands in this case, it is possible to handle all of the limited frequency bands and the non-limited frequency bands if all the transmission signal processing units 87 are appropriately combined.

The channel management unit 86 manages (sets) which transmission signal processing unit 87 will be used to transmit a transmission frame for each frequency band available for the wireless communication device 41 and each frequency block composed of a plurality of continuous frequency channels.

That is, the channel management unit 86 operates a required number of transmission signal processing units 87 each time according to a frequency band used for transmission of a transmission frame, that is, a distribution of frequency channels.

For example, a transmission frame is transmitted using a part of a 5 GHz band, a non-limited frequency band of a 6 GHz band, and a limited frequency band of the 6 GHz band.

In such a case, the transmission signal processing unit 87-1 transmits a part of the transmission frame using a part of the 5 GHz band and the transmission signal processing unit 87-2 transmits a part of the transmission frame using the non-limited frequency band of the 6 GHz band, for example.

Further, the transmission signal processing unit 87-3 and the transmission signal processing unit 87-4 transmit a part of the transmission frame using the limited frequency band of the 6 GHz band.

Accordingly, a part of the 5 GHz band, a non-limited frequency band of the 6 GHz band, and a limited frequency band of the 6 GHz band are used to transmit the transmission frame as a whole. That is, a plurality of different frequency channels (frequency bands) are bundled by channel bonding (carrier aggregation) and used for wireless communication.

In this manner, the channel management unit 86 serves as a control unit that controls the operation of each transmission signal processing unit 87 such that wireless communication is performed within a predetermined bandwidth by using frequency channels in a non-limited frequency band and frequency channels in a limited frequency band in combination.

In addition, a transmission frame may be transmitted using a plurality of discontinuously arranged frequency blocks or frequency channels such that a predetermined bandwidth is secured, for example.

In such a case, each transmission signal processing unit 87 may determine a frequency channel (frequency block) used for transmission of a transmission frame depending on the number of consecutively arranged frequency channels.

The transmission/reception antenna unit 88 transmits the transmission frame supplied from the transmission signal processing unit 87 to the device of the communication partner or receives a reception frame transmitted from the device of the communication partner and supplies the reception frame to the reception signal processing unit 89.

The reception signal processing units 89-1 to 89-4 perform demodulation processing for receiving a signal of a predetermined frequency channel on a reception frame supplied from the transmission/reception antenna unit 88 according to control of the channel management unit 86 and supply a signal obtained as a result of demodulation processing to the reception frame analysis unit 90.

That is, each reception signal processing unit 89 serves as a reception unit that receives a reception frame transmitted through a predetermined frequency channel of a non-limited frequency band or a limited frequency band, more specifically, a part of the signal of the reception frame through the transmission/reception antenna unit 88.

Here, for example, the plurality of reception signal processing units 89 receive respective parts of the reception frame transmitted through different frequency channels to receive one reception frame as a whole.

As in transmission of a transmission frame, the channel management unit 86 operates a required number of reception signal processing units 89 each time depending on a frequency band used for transmission of the reception frame, that is, a distribution of frequency channels. In other words, the channel management unit 86 operates different reception signal processing units 89 for respective frequency bands (frequency channels).

The reception frame analysis unit 90 reconstructs a reception frame from a signal supplied from the reception signal processing unit 89.

Further, the reception frame analysis unit 90 extracts necessary information from the reception frame, for example, information described in an information element and the like, by performing analysis processing on the reconstructed reception frame and supplies the information to the channel management unit 86.

Further, the reception frame analysis unit 90 extracts reception data from the reception frame on the basis of the result of analysis processing and supplies the reception data to the reception sequence management unit 91.

The reception sequence management unit 91 manages the sequence of the reception data supplied from the reception frame analysis unit 90.

That is, reception data corresponds to transmission data (user data) stored in the transmission frame, and a sequence number is assigned to each piece of reception data.

The reception sequence management unit 91 sorts a plurality of pieces of reception data extracted from the reception frame in order of sequence number and supplies them to the reception buffer 92.

The reception buffer 92 temporarily holds the reception data supplied from the reception sequence management unit 91 and supplies the held reception data to the apparatus control module 53 via the interface 81.

### <Communication sequence>

Subsequently, a communication sequence according to the wireless communication device 41 will be described.

Here, it is assumed that the wireless communication device 41 serves as the communication terminal 11 shown in Fig. 1, another wireless communication device 41 different from the wireless communication device 41 serves as an access point 12, and the communication terminal 11 and the access point 12 perform wireless communication.

Further, it is assumed that geographic location information is acquired by receiving a signal from the positioning satellite 15 shown in Fig. 1 and available frequency time information is acquired from the database server 14.

In such a case, user data is exchanged between the communication terminal 11 and the access point 12 through wireless communication, for example, as shown in Fig. 6.

In the example shown in Fig. 6, first, the access point 12 obtains geographic location information by receiving a signal (positioning data) from the positioning satellite 15, as indicated by an arrow Q11, and also obtain current time information from an external server, a satellite, or the like.

Then, when the access point 12 needs to use a limited frequency band when performing wireless communication with the communication terminal 11, for example, the access point 12 accesses the database server 14 as indicated by an arrow Q12.

That is, the access point 12 requests transmission of available frequency time information by transmitting the geographic location information to the database server 14.

Then, the database server 14 transmits the available frequency time information to the access point 12 as shown by the arrow Q13 in response to the request of the access point 12.

Specifically, the database server 14 generates available frequency time information indicating whether or not limited frequency bands can be used at each time with respect to the current position of the access point 12 indicated by the geographic location information and transmits the available frequency time information to the access point 12.

That is, the access point 12 is notified of frequencies (frequency channels) and time (time zone) in a limited frequency band available at the current position of the access point 12.

The access point 12 sets frequency channels (frequency band) available for wireless communication and a use time limit of the frequency channels (available time zone) in operation of a network to which the access point 12 belongs, that is, a wireless LAN system, on the basis of the available frequency time information, and generates operation band information indicating the setting result.

Here, the access point 12 selects a plurality of frequency channels available for wireless communication such that the sum of bandwidths of the frequency channels indicated by the operation band information becomes a bandwidth (for example, 320 MHz) desired to be secured in the network of the access point 12.

In particular, frequency channels available for wireless communication are selected (determined) from frequency channels in non-limited frequency bands and available frequency channels in limited frequency bands indicated by the available frequency time information. Here, frequency channels in non-limited frequency bands can be preferentially selected, for example.

Further, the access point 12 stores the operation band information in a transmission frame as a beacon signal and transmits the transmission frame to the communication terminal 11 connected to the network to which the access point 12 belongs, as indicated by an arrow Q14. That is, the communication terminal 11 is notified of the operation band information.

The beacon signal (beacon frame) in which the operation band information is stored is periodically transmitted to the communication terminal 11, for example.

The communication terminal 11 sets frequency channels to be used for wireless communication and a use time limit of each frequency channel on the basis of the operation band information included in the received beacon signal.

Hereinafter, a frequency channel available for wireless communication, that is, a frequency channel indicated by the operation band information, will also be referred to as an operation channel.

After the operation channels are set, the communication terminal 11 and the access point 12 exchange user data by transmitting and receiving transmission frames using the set operation channels, that is, the frequency channels indicated by the operation band information, as indicated by an arrow Q15.

In this case, the communication terminal 11 and the access point 12 can secure a desired bandwidth and realize high-speed wireless communication by using limited frequency bands as needed.

Although an example in which a beacon signal is used for notification of operation band information has been described here, the operation band information may be stored and transmitted in a probe response or the like.

In such a case, when the access point 12 receives a probe request from the communication terminal 11, the access point 12 adds an information element of the operation band information to a probe response to the probe request and transmits the probe response to the communication terminal 11.

As described above, it is possible to secure a desired bandwidth by acquiring the available frequency time information from the database server 14 and determining frequency channels serving as operation channels from non-limited frequency bands and limited frequency bands on the basis of the available frequency time information to perform communication with higher efficiency.

In this example, a conventional operation method can be used for non-limited frequency bands, and if a sufficient bandwidth cannot be secured only using the non-limited frequency bands, limited frequency bands can also be used to secure a sufficient bandwidth and efficient and high-speed wireless communication can be realized.

In particular, it is possible to efficiently set operation channels by exchanging operation band information between the access point 12 and the communication terminal 11. That is, since the access point 12 and the communication terminal 11 can share information on frequency channels used for communication, wireless communication can be performed even if discontinuously arranged frequency channels are used, for example.

Further, although an example in which the access point 12 accesses the database server 14 has been described in Fig. 6, for example, the communication terminal 11 may access the database server 14, as shown in Fig. 7.

Then, even when the access point 12 does not have the function of accessing the database server 14 and acquiring the available frequency time information, non-limited frequency bands and limited frequency bands can be used in combination as in the example shown in Fig. 6.

In the example of Fig. 7, the communication terminal 11 obtains geographic location information by receiving a signal (positioning data) from the positioning satellite 15 and obtains current time information from an external server, a satellite, or the like, as indicated by an arrow Q21.

Then, in a case where it is necessary to use limited frequency bands, for example, a case where a desired bandwidth cannot be secured only using non-limited frequency bands, the communication terminal 11 accesses the database server 14, as indicated by an arrow Q22.

That is, the communication terminal 11 requests transmission of available frequency time information by transmitting the geographic location information to the database server 14.

Then, the database server 14 transmits the available frequency time information to the communication terminal 11, as indicated by an arrow Q23, in response to the request of the communication terminal 11.

Further, the communication terminal 11 specifies (determines) frequency channels that can be used in the network to which it belongs and a use time limit of the frequency channels on the basis of the available frequency time information as needed.

Further, the communication terminal 11 notifies the surrounding access point 12 of the available frequency time information, as indicated by an arrow Q24.

When the access point 12 receives the available frequency time information from the communication terminal 11, the access point 12 sets operation channels and a use time limit of each operation channel such that a desired bandwidth is secured on the basis of the available frequency time information and generates operation band information.

In this case, the access point 12 can obtain the available frequency time information without accessing the database server 14 by itself and can generate the operation band information such that a desired bandwidth is secured.

The access point 12 stores the operation band information in a predetermined transmission frame and transmits the transmission frame to the communication terminal 11, as indicated by an arrow Q25.

When the communication terminal 11 receives the operation band information from the access point 12, the communication terminal 11 sets operation channels and a use time limit of each operation channel on the basis of the received operation band information.

Thereafter, the communication terminal 11 and the access point 12 exchange user data and the like by transmitting and receiving transmission frames using the set operation channels, as indicated by an arrow Q26.

Even when the communication terminal 11 acquires the available frequency time information in this manner, it is possible to secure a desired bandwidth by appropriately using non-limited frequency bands and limited frequency bands in combination to realize more efficient and high-speed wireless communication.

### <Information exchanged between access point and communication terminal>

Here, Fig. 8 to Fig. 14 show examples of configurations of various types of information (information elements) exchanged between the access point 12 and the communication terminal 11 and various types of information exchanged with the database server 14.

Fig. 8 is a diagram showing an example of a configuration of an information element of operation band information.

In the example shown in Fig. 8, the operation band information includes an element ID "Element ID" that identifies the information element (operation band information), an information length "Length" of the information element, and a group ID "Group BSS ID" of a network to which an operation band information transmission source (access point 12) belongs, that is a basic service set (BSS).

In addition, the operation band information also includes an operation type "Operate Type" of a transmission frame in which the operation band information is stored, transmission power information "Power Class" of the transmission frame, and geographic location information "Geographic Location" indicating the current position of the operation band information transmission source.

This geographic location information indicates the current position of the access point 12, that is, a geographic location where operation channels are operated according to the operation band information.

Further, the operation band information includes a use time limit "Operation Time Limit" of the operation band information, an operation bandwidth "Operation Bandwidth" that is the total bandwidth of the operation channels when wireless communication based on the operation band information is performed, and operation channel information "Operation Channel Info" indicating the operation channels.

In addition, the operation channel information "Operation Channel Info" includes operation channel map information "Operation Channel Bitmap", primary channel information "Primary Channel", higher usable band information "Higher Usable Band Map", middle usable band information "Middle Usable Band Map", and lower usable band information "Lower Usable Band Map".

Here, the operation channel map information is bitmap information indicating a frequency channel serving as an operation channel, that is, a frequency channel that can be used during wireless communication.

The primary channel information is information indicating a primary frequency channel, that is, a frequency channel with a bandwidth of 20 MHz having the highest priority.

Further, the higher usable band information is information indicating a frequency band of a frequency channel having the next highest priority following the frequency channel indicated by the primary channel information.

Similarly, the middle usable band information is information indicating a frequency band having the next highest priority following the frequency band indicated by the higher usable band information, and the lower usable band information is information indicating a frequency band having the lowest priority.

The frequency bands indicated by the primary channel information, the higher usable band information, the middle usable band information, and lower usable band information are frequency bands of frequency channels indicated by the operation channel map information.

For example, during wireless communication, operation channels to be used for communication are selected from frequency channels indicated by the operation channel map information such that the total bandwidth of all operation channels actually used for communication falls within an operation bandwidth. Here, the frequency channels to be used for communication are sequentially selected from operation channels of frequency bands having high priority.

The above-described information element of the operation band information shown in Fig. 8 is stored in a beacon signal or the like and transmitted to the communication terminal 11. Accordingly, each communication terminal 11 is notified of parameters necessary to set operation channels, included in the operation band information.

Fig. 9 is a diagram showing an example of a configuration of an available frequency time information frame transmitted from the communication terminal 11 to the access point 12, that is, a transmission frame such as a probe request or the like including the available frequency time information.

In the example shown in Fig. 9, the available frequency time information frame includes type information "Frame Control" indicating the type of the transmission frame, duration information "Duration" indicating the duration of the transmission frame, a transmission address "Transmit Address" indicating a source of the transmission frame, and a reception address "Receive Address" indicating a destination of the transmission frame.

In addition, the available frequency time information frame also includes an operation type "Operate Type" of the transmission frame and geographic location information "Geographic Location" indicating the current position of the communication terminal 11 that has obtained (acquired) the available frequency time information.

Further, the available frequency time information frame includes a use time limit of frequency channels indicated by the available frequency time information, that is, an available time limit "Available Time Limit", available bandwidth information "Available Bandwidth" indicating an available bandwidth, and bitmap information "Available Channel Map" indicating available frequency channels.

Fig. 10 is a diagram showing an example of a configuration of a notification frame for notifying operation band information.

This notification frame is, for example, a probe response transmitted by the access point 12 that has received a probe request including available frequency time information from the communication terminal 11 to the communication terminal 11 as a response to the probe request, or the like.

In the example shown in Fig. 10, the notification frame includes type information "Frame Control" indicating the type of the transmission frame (notification frame), duration information "Duration" of the transmission frame, a transmission address "Transmit Address" of the transmission frame, and a reception address "Receive Address" of the transmission frame.

In addition, the notification frame includes an operation type "Operate Type", geographic location information "Geographic Location", a use time limit of the operation band information "Operation Time Limit", an operation bandwidth "Operation Bandwidth" during wireless communication based on the operation band information, and operation channel information "Operation Channel Info".

The operation channel information included in the notification frame includes operation channel map information "Operation Channel Bitmap", primary channel information "Primary Channel", higher usable band information "Higher Usable Band Map", middle usable band information "Middle Usable Band Map", and lower usable band information "Lower Usable Band Map" as in the example shown in Fig. 8.

Fig. 11 is a diagram showing an example of a configuration of an information element of operable bandwidth information included in a beacon signal or the like as a transmission frame.

This operable bandwidth information is stored in a beacon signal or the like transmitted from the access point 12 to the communication terminal 11 when wireless communication is performed using only non-limited frequency bands, for example.

In the example shown in Fig. 11, the information element of the operable bandwidth information includes an element ID "Element ID", an information length "Length", a BSS group ID "Group BSS ID", and an operation type "Operate Type".

In addition, the information element of the operable bandwidth information includes a maximum bandwidth "Available Bandwidth" available for wireless communication, available information "2.4 GHz Available" that indicates frequency channels available in a 2.4 GHz band, available information "5 GHz Available" in a 5 GH band, available information "6 GHz Available" in a 6 GHz band, and available information "Limited Band" in limited frequency bands.

Fig. 12 is a diagram showing an example of a configuration of a bandwidth increase request frame by which the communication terminal 11 that has acquired the operable bandwidth information shown in Fig. 11 from the access point 12 and is performing wireless communication or intends to perform wireless communication requests operation bandwidth increase from the access point 12.

In the example shown in Fig. 12, the bandwidth increase request frame includes type information "Frame Control" indicating the type of the transmission frame (bandwidth increase request frame), duration information "Duration" of the transmission frame, a transmission address "Transmit Address" of the transmission frame, a reception address "Receive Address" of the transmission frame, and an operation type "Operate Type".

In addition, the bandwidth increase request frame includes a requested operation bandwidth, that is, requested operation bandwidth information "Request Bandwidth" indicating an increased operation bandwidth, available information "2.4 GHz Available" in a 2.4 GHz band, available information "5 GHz Available" in a 5 GHz band, available information "6 GHz Available" in a 6 GHz band, and available information "Limited Band" in limited frequency bands.

Here, available information of each frequency band included in the bandwidth increase request frame indicates whether the communication terminal 11 that requests operation bandwidth increase can handle use of such frequency bands.

Therefore, for example, the available information "2.4 GHz Available" in the 2.4 GHz band indicates whether the communication terminal 11 can handle use of the 2.4 GHz band.

Further, Fig. 13 shows an example of a configuration of an available frequency time information request which is a request frame for requesting transmission of available frequency time information transmitted to the database server 14.

In this example, the available frequency time information request includes type information "Frame Control" indicating the type of the transmission frame (request frame), duration information "Duration" of the transmission frame, a transmission address "Transmit Address" of the transmission frame, a reception address "Receive Address" of the transmission frame, and a request type "Request Type".

In addition, the available frequency time information request includes a start channel "Start Channel", an end channel "End Channel", a country identifier "Country Code", an area identifier "Area Code", and geographic location information "Geographic Location" of a source of the available frequency time information request.

Here, the start channel "Start Channel" and the end channel "End Channel" are the start frequency channel and the end frequency channel of a frequency band for which availability is inquired among limited frequency bands.

In addition, the country identifier "Country Code" and the area identifier "Area Code" are information indicating a country and an area in which the source of the available frequency time information request performs wireless communication, that is, limited frequency bands are operated.

Further, in response to the available frequency time information request having the configuration shown in Fig. 13, the database server 14 transmits available frequency time information shown in Fig. 14, that is, an available frequency time information notification frame.

In the example shown in Fig. 14, the available frequency time information includes type information "Frame Control" indicating the type of the transmission frame (notification frame), duration information "Duration" of the transmission frame, a transmission address "Transmit Address" of the transmission frame, a reception address "Receive Address" of the transmission frame, and a response type "Response Type".

In addition, the available frequency time information includes a bitmap length "Bitmap Length" of bitmap information, a start channel "Start Channel" of the bitmap information, bitmap information "Available Channel Map" indicating available frequency channels, and a use time limit of a frequency channel, that is, an available time limit "Available Time Limit".

By appropriately transmitting and receiving the transmission frames and the like shown in Fig. 8 to Fig. 14 as described above, the access point 12 and the communication terminal 11 can ascertain frequency channels available in limited frequency bands and a use time limit thereof.

### <Description of operation band management processing>

Next, the operation performed when the wireless communication device 41 serves as the access point 12 or the communication terminal 11 will be described in more detail.

First, the operation when the wireless communication device 41 serves as the access point 12 will be described with reference to the flowchart of Fig. 15. That is, operation band management processing performed by the wireless communication device 41 will be described below with reference to the flowchart of Fig. 15.

When the channel management unit 86 starts the operation as the access point 12 in step S11, an operation state is set to a request waiting state and various requests from the communication terminal 11 are received.

For example, when the transmission/reception antenna unit 88 receives a reception frame in the request waiting state, the reception signal processing unit 89 performs demodulation processing or the like on the reception frame supplied from the transmission/reception antenna unit 88 and supplies a signal obtained as a result of demodulation processing to the reception frame analysis unit 90.

Then, the reception frame analysis unit 90 reconstructs a reception frame from the signal supplied from the reception signal processing unit 89, performs analysis processing, extracts information described in the information element of the reception frame, and supplies the extracted information to the channel management unit 86.

In step S12, the channel management unit 86 determines whether or not a probe request has been received as a reception frame from the communication terminal 11.

For example, when a reception frame from the communication terminal 11 is received by the transmission/reception antenna unit 88, information extracted from the reception frame is supplied from the reception frame analysis unit 90 to the channel management unit 86.

Therefore, the channel management unit 86 can identify what kind of reception frame has been received from the communication terminal 11 on the basis of the information supplied from the reception frame analysis unit 90.

If it is determined in step S12 that the probe request has been received, processing proceeds to step S22 in which information on operation channels is acquired and a probe response as a transmission frame is transmitted.

On the other hand, if it is determined in step S12 that the probe request has not been received, the channel management unit 86 determines whether or not an association request for requesting connection to a network has been received as a reception frame from the communication terminal 11 in step S13.

If it is determined in step S13 that the association request has been received, the channel management unit 86 acquires application information of the communication terminal 11 that has requested the association from the reception frame analysis unit 90 in step S14.

Here, the application information is information on applications that can be executed by the communication terminal 11 and is included in the association request.

Accordingly, when the association request is received as a reception frame, the reception frame analysis unit 90 supplies the application information included in the reception frame to the channel management unit 86.

When processing of step S14 has been performed, processing proceeds to step S17.

On the other hand, if it is determined in step S13 that the association request has not been received, the channel management unit 86 determines whether or not a bandwidth increase request frame for requesting operation bandwidth increase has been received as a reception frame from the communication terminal 11 in step S15.

If it is determined in step S15 that the bandwidth increase request frame has not been received, processing proceeds to step S24.

On the other hand, if it is determined in step S15 that the bandwidth increase request frame has been received, the channel management unit 86 obtains requested operation bandwidth information stored in the bandwidth increase request frame from the reception frame analysis unit 90 in step S16.

For example, when the bandwidth increase request frame shown in Fig. 12 is received as a reception frame, the reception frame analysis unit 90 supplies the information included in the reception frame to the channel management unit 86.

Accordingly, the channel management unit 86 can obtain (acquire) the requested operation bandwidth information and available information of each frequency band from the reception frame analysis unit 90.

When processing of step S16 has been performed, processing then proceeds to step S17.

When processing of step S14 or step S16 has been performed, processing of step S17 is performed.

That is, the channel management unit 86 reads operation band information held thereby at the current time in step S17.

For example, when the wireless communication device 41 operates as the access point 12, the channel management unit 86 generates and holds the operation band information including the use time limit, the operation bandwidth, the operation channel information, and the like, shown in Fig. 8. In step S17, the operation band information generated in this manner is read.

Further, when the channel management unit 86 holds the operable bandwidth information shown in Fig. 11, for example, the channel management unit 86 also reads the operable bandwidth information appropriately and uses the operable bandwidth information for processing of step S19 and step S21 which will be described later, and the like as necessary.

In step S18, the channel management unit 86 determines whether or not an operation bandwidth needs to be expanded on the basis of the application information acquired in step S14 or the requested operation bandwidth information acquired in step S16 and the operation band information read in step S17.

For example, when an application that can be executed by the communication terminal 11 can be identified from the application information and the application is executed, it is possible to identify how much operation bandwidth is required.

Accordingly, the channel management unit 86 can determine whether or not the operation bandwidth needs to be expanded from the application information and the operation bandwidth included in the operation band information, that is, the operation bandwidth at the current time.

Further, when the bandwidth indicated by the requested operation bandwidth information is wider than the operation bandwidth included in the operation band information at the current time, for example, it is determined that the operation bandwidth needs to be expanded.

If it is determined in step S18 that the operation bandwidth does not need to be expanded, that is, if the operation bandwidth used in the current operation is sufficient, the operation bandwidth is not expanded, and then processing proceeds to step S22.

On the other hand, if it is determined in step S18 that the operation bandwidth needs to be expanded, the channel management unit 86 determines in step S19 whether or not expansion in a limited frequency band is necessary.

For example, in order to expand the operation bandwidth, a new frequency channel to be used as an operation channel is necessary. That is, it is necessary to add a new operation channel.

In step S19, if a frequency channel for expanding the operation bandwidth can be secured from a non-limited frequency band, it is determined that expansion in a limited frequency band is not necessary.

On the other hand, if a frequency channel necessary to expand the operation bandwidth cannot be secured only with a non-limited frequency band, it is determined that expansion in a limited frequency band is necessary.

If it is determined in step S19 that expansion in a limited frequency band is necessary, the information collection unit 85 acquires available frequency time information in step S20.

That is, the channel management unit 86 generates, for example, the available frequency time information request shown in Fig. 13 and supplies it to the information collection unit 85 to request access to the database server 14.

Then, the information collection unit 85 supplies the available frequency time information request to the network connection module 51 such that the available frequency time information request to be transmitted to the database server 14 via the interface 81 and the apparatus control module 53.

Accordingly, since the available frequency time information shown in Fig. 14, for example, is transmitted from the database server 14, the network connection module 51 receives the transmitted available frequency time information and supplies it to the interface 81 of the wireless communication module 55 via the apparatus control module 53.

The interface 81 supplies the available frequency time information supplied from the apparatus control module 53 to the channel management unit 86 via the information collection unit 85.

When the available frequency time information is supplied to the channel management unit 86 in this manner, processing proceeds to step S21.

The channel management unit 86 appropriately generates and holds the operable bandwidth information shown in Fig. 11 on the basis of the obtained available frequency time information.

If it is determined in step S19 that expansion in a limited frequency band is not necessary, processing of step S20 is not performed, and then processing proceeds to step S21.

If it is determined in step S19 that expansion in a limited frequency band is not necessary, or if processing in step S20 is performed, the channel management unit 86 sets an operation channel in step S21 and expands the operation bandwidth.

For example, when processing of step S20 has not been performed, the channel management unit 86 sets a frequency channel in a non-limited frequency band as a new operation channel on the basis of the operation band information read in step S17 and the application information or the requested operation bandwidth information. That is, a frequency channel to be a new operation channel is determined from frequency channels in the non-limited frequency band.

On the other hand, when processing of step S20 has been performed, the channel management unit 86 sets a frequency channel in a limited frequency band as a new operation channel on the basis of the operation band information read in step S17, the application information or the requested operation bandwidth information, and the available frequency time information obtained in step S20. That is, a frequency channel to be a new operation channel is determined from frequency channels in the limited frequency band.

In this case, both a frequency channel in a limited frequency band and a frequency channel in a non-limited frequency band may be used as new operation channels.

When a new operation channel is set and the operation bandwidth is expanded in this manner, the channel management unit 86 updates the held operation band information. Here, the use time limit, the operation bandwidth, the operation channel information, and the like included in the operation band information shown in Fig. 8 are updated, for example.

When processing of step S21 has been performed, it is determined in step S18 that the operation band does not need to be expanded, or it is determined in step S12 that the probe request has been received, processing of step S22 is performed.

In step S22, the channel management unit 86 obtains information on the operation channel, supplies the information on the operation channel to the transmission frame construction unit 84, and instructs construction (generation) of a response frame.

For example, the channel management unit 86 reads the held operation band information as information on the operation channel or reads other types of information necessary to generate the response frame.

Here, the response frame is a transmission frame generated as a response to, for example, a probe request, an association request, or a bandwidth increase request frame.

Accordingly, if it is determined in step S12 that the probe request has been received, for example, the transmission frame construction unit 84 generates a response frame for the probe request.

In addition, if it is determined in step S13 that the association request has been received, for example, the transmission frame construction unit 84 generates a response frame for the association request.

Further, if it is determined in step S15 that the bandwidth increase request frame has been received, for example, the transmission frame construction unit 84 generates a response frame for the bandwidth increase request frame.

Here, the transmission frame construction unit 84 generates, for example, a response frame having the frame configuration shown in Fig. 10 as a transmission frame on the basis of the information on the operation channel supplied from the channel management unit 86. That is, for example, a response frame including operation band information including geographic location information, a use time limit, an operation bandwidth, operation channel information, and the like is generated.

The transmission frame construction unit 84 supplies the generated response frame to the transmission signal processing unit 87. In addition, the channel management unit 86 controls the operation of the transmission signal processing unit 87 on the basis of the operation band information.

The transmission signal processing unit 87 performs modulation processing and signal processing on the response frame supplied from the transmission frame construction unit 84 according to control of the channel management unit 86 and supplies a signal obtained as a result of processing to the transmission/reception antenna unit 88.

In step S23, the transmission/reception antenna unit 88 transmits the response frame supplied from the transmission signal processing unit 87.

When the response frame has been transmitted, processing returns to step S11 and the above-described processing is repeated.

Meanwhile, it is not always necessary to use all frequency bands indicated by the operation band information, that is, available frequency channels (operation channels) at the time of actually performing wireless communication.

In the access point 12 and each communication terminal 11, an operation channel actually used for communication is selected from frequency channels within the available frequency bands indicated by the operation band information, that is, frequency channels used as operation channels.

In addition, if it is determined in step S15 that the bandwidth increase request frame has not been received, the channel management unit 86 determines whether or not an operation channel in a limited frequency band is set on the basis of the operation band information held thereby in step S24.

That is, it is determined whether a frequency channel in a limited frequency band is used as an operation channel.

If it is determined in step S24 that an operation channel in a limited frequency band has been set, processing proceeds to step S25.

In step S25, the channel management unit 86 determines whether or not the use time limit of the operation channel in the limited frequency band has been exceeded on the basis of the operation band information held therein and the current time information supplied from the information collection unit 85.

If it is determined in step S25 that the use time limit has been exceeded, the operation channel of the limited frequency band used so far cannot be used and a new operation channel needs to be set, and thus processing proceeds to step S26.

In step S26, the channel management unit 86 reads the operation band information held thereby. Here, the channel management unit 86 also reads the operable bandwidth information appropriately and also uses the operable bandwidth information for processing of step S21 as necessary.

When processing of step S26 has been performed, processing proceeds to step S19 and the above-described processing is performed. Here, if a band corresponding to the operation channel of the limited frequency band whose use time limit has been exceeded can be newly secured in a non-limited frequency band, it is determined that expansion in the limited frequency band is not necessary in step S19.

If it is determined in step S25 that the use time limit has not been exceeded, processing proceeds to step S27. Further, even if it is determined in step S24 that the operation channel in the limited frequency band has not been set, processing proceeds to step S27 thereafter.

In step S27, the channel management unit 86 determines whether or not a beacon signal transmission time has arrived. For example, when the wireless communication device 41 operates as the access point 12, a beacon signal is periodically transmitted at a predetermined time interval.

If it is determined in step S27 that the beacon signal transmission time has not yet arrived, processing returns to step S11 and the above-described processing is repeated.

On the other hand, if it is determined in step S27 that the beacon signal transmission time has arrived, the channel management unit 86 reads the held operation band information, supplies it to the transmission frame construction unit 84, and instructs generation of a beacon signal in step S28.

The transmission frame construction unit 84 generates, for example, a transmission frame including the information element of the operation band information shown in Fig. 8 as a beacon signal on the basis of the operation band information supplied from the channel management unit 86 and supplies the transmission frame to the transmission signal processing unit 87.

In addition, the channel management unit 86 controls the operation of the transmission signal processing unit 87 on the basis of the operation band information and causes the beacon signal in which the operation band information is stored to be transmitted.

That is, the transmission signal processing unit 87 performs modulation processing and signal processing on the beacon signal (transmission frame) supplied from the transmission frame construction unit 84 according to control of the channel management unit 86 and supplies a signal obtained as a result of processing to the transmission/reception antenna unit 88.

In some cases, a beacon signal including the operable bandwidth information shown in Fig. 11 may be generated instead of the beacon signal including the information element of the operation band information shown in Fig. 8.

In step S29, the transmission/reception antenna unit 88 transmits the beacon signal supplied from the transmission signal processing unit 87.

After the beacon signal is transmitted, processing returns to step S11 and the above-described processing is repeated.

In the wireless communication device 41, processing of steps S11 to S29 described above is repeatedly performed while the wireless communication device 41 operates as the access point 12.

As described above, the wireless communication device 41 periodically transmits a beacon signal while updating the operation band information appropriately and transmits a response frame in response to a request of the communication terminal 11.

At this time, it is possible to realize more efficient and high-speed wireless communication by setting operation channels using a limited frequency band as well as a non-limited frequency band and notifying the communication terminal 11 of the operation band information through a beacon signal or a response frame as necessary.

### <Description of operation channel setting processing>

Next, the operation when the wireless communication device 41 serves as the communication terminal 11 (station) will be described.

That is, operation channel setting processing performed by the wireless communication device 41 operating as the communication terminal 11 will be described below with reference to the flowchart of Fig. 16.

In step S61, the channel management unit 86 acquires necessary bandwidth information from the apparatus control module 53 via the information collection unit 85 and the interface 81.

For example, the apparatus control module 53 ascertains how much operation bandwidth is necessary for applications executed by the wireless communication device 41.

The apparatus control module 53 generates necessary bandwidth information indicating an operation bandwidth necessary for applications executed by the wireless communication device 41 in response to a request of the channel management unit 86 and supplies the necessary bandwidth information to the channel management unit 86 via the interface 81 and the information collection unit 85.

In step S61, the channel management unit 86 may also acquire application information from the apparatus control module 53.

In step S62, the channel management unit 86 determines whether or not a beacon signal has been received from the access point 12.

If it is determined in step S62 that the beacon signal has been received, the reception frame analysis unit 90 extracts an information element of the received beacon signal in step S63 and supplies the extracted information element to the channel management unit 86.

For example, when a transmission frame is transmitted from the access point 12 while the wireless communication device 41 operates as the communication terminal 11, the transmission/reception antenna unit 88 receives the transmission frame as a reception frame and supplies the transmission frame to the reception signal processing unit 89.

Then, the reception signal processing unit 89 performs demodulation processing or the like on the reception frame supplied from the transmission/reception antenna unit 88 and supplies a signal obtained as a result of demodulation processing to the reception frame analysis unit 90.

The reception frame analysis unit 90 reconstructs the reception frame from the signal supplied from the reception signal processing unit 89 and performs analysis processing.

Then, the reception frame analysis unit 90 extracts information described in the information element and the like of the reception frame and supplies the extracted information to the channel management unit 86.

In this example, a beacon signal of the information element of the operation band information shown in Fig. 8, for example, is received as a reception frame and the reception frame analysis unit 90 extracts the operation band information from the received beacon signal and supplies the extracted operation band information to the channel management unit 86.

In addition, a beacon signal including the operable bandwidth information shown in Fig. 11, for example, may be received or a beacon signal that does not include the operation band information may be received.

For example, when a beacon signal including the operable bandwidth information is received, the channel management unit 86 appropriately holds the operable bandwidth information extracted from the beacon signal and supplied from the reception frame analysis unit 90.

In this case, for example, the channel management unit 86 uses the operable bandwidth information for generation of a bandwidth increase request frame to be transmitted in step S68, steps S72 to S74, and step S69, which will be described later, as necessary.

In step S64, the channel management unit 86 determines whether or not the information element extracted in step S63 includes the operation band information.

If it is determined in step S64 that the operation band information is included, processing proceeds to step S67.

Although the operation band information is not included in step S64, processing may proceed to step S67 even when the operable bandwidth information shown in Fig. 11 is included in the information element.

In such a case, the operable bandwidth information is acquired in step S67 which will be described later, and the operable bandwidth information is used instead of the operation band information in the subsequent processing or the operable bandwidth information and the operation band information are used.

On the other hand, if it is determined in step S64 that the operation band information is not included, the channel management unit 86 instructs the transmission frame construction unit 84 to generate a probe request, and then processing proceeds to step S65. In addition, even if it is determined in step S62 that the beacon signal has not been received, processing proceeds to step S65 thereafter.

In this case, the transmission frame construction unit 84 generates a probe request as a transmission frame in response to the instruction from the channel management unit 86 and supplies the probe request to the transmission signal processing unit 87.

Further, the transmission signal processing unit 87 performs modulation processing and signal processing on the probe request supplied from the transmission frame construction unit 84 according to control of the channel management unit 86 and supplies a signal obtained as a result of processing to the transmission/reception antenna unit 88.

In step S65, the transmission/reception antenna unit 88 transmits the probe request supplied from the transmission signal processing unit 87.

In step S66, the channel management unit 86 determines whether or not a response frame for the probe request has been received.

If it is determined in step S66 that the response frame has not been received, processing of step S66 is repeated until the response frame is received.

On the other hand, if it is determined in step S66 that the response frame has been received, processing proceeds to step S67.

Here, for example, a response frame (notification frame) in which the operation band information is stored is received, as shown in Fig. 10. In this case, the reception frame analysis unit 90 extracts the operation band information from the response frame as a reconstructed reception frame and supplies the extracted operation band information to the channel management unit 86.

If it is determined in step S66 that the response frame has been received or if it is determined in step S64 that the operation band information is included, processing of step S67 is performed.

In step S67, the channel management unit 86 obtains (acquires) the operation band information included in the response frame for the probe request or the beacon signal by acquiring the operation band information from the reception frame analysis unit 90.

In this case, the channel management unit 86 obtains, for example, the information element shown in Fig. 8 included in the beacon signal and the operation band information including the geographic location information, the use time limit, the operation bandwidth, and the operation channel information extracted from the notification frame of the response to the probe request shown in Fig. 10.

In step S68, the channel management unit 86 determines whether the bandwidth necessary for applications executed by the wireless communication device 41 can be secured on the basis of the necessary bandwidth information obtained in step S61 and the operation band information obtained in step S67.

For example, when the operation bandwidth indicated by the operation band information is equal to or greater than the operation bandwidth indicated by the necessary bandwidth information in step S68, it is determined that the necessary bandwidth can be secured.

If it is determined in step S68 that the necessary bandwidth cannot be secured, processing proceeds to step S69.

In this case, the channel management unit 86 generates requested operation bandwidth information, available information with respect to each frequency band of non-limited frequency bands and limited frequency bands, and the like on the basis of the operation band information and the necessary bandwidth information, supplies the generated information to the transmission frame construction unit 84, and instructs generation of a bandwidth increase request frame.

Then, the transmission frame construction unit 84 generates the bandwidth increase request frame shown in Fig. 12 as a transmission frame on the basis of the requested operation bandwidth information and the available information supplied from the channel management unit 86 and supplies the transmission frame to the transmission signal processing unit 87.

In addition, the transmission signal processing unit 87 performs modulation processing and signal processing on the bandwidth increase request frame supplied from the transmission frame construction unit 84 according to control of the channel management unit 86 and supplies a signal obtained as a result of processing to the transmission/reception antenna unit 88.

In step S69, the transmission/reception antenna unit 88 transmits the bandwidth increase request frame supplied from the transmission signal processing unit 87.

In step S70, the channel management unit 86 determines whether or not a response frame for the bandwidth increase request frame has been received from the access point 12.

If it is determined in step S70 that the response frame has not been received, processing proceeds to step S72.

On the other hand, if it is determined in step S70 that the response frame has been received, the channel management unit 86 acquires the operation band information from the reception frame analysis unit 90 in step S71, and then processing proceeds to step S72.

In this case, for example, the transmission/reception antenna unit 88 receives the response frame having the frame configuration shown in Fig. 10, that is, the response frame in which the operation band information shown in Fig. 10 is stored as a response to the bandwidth increase request frame.

The operation band information included in this response frame is operation band information after expansion of the operation band performed in response to the bandwidth increase request frame.

The channel management unit 86 acquires the operation band information supplied from the reception frame analysis unit 90 at the time of reception of such a response frame.

Further, if it is determined in step S68 that the necessary bandwidth can be secured, processing proceeds to step S72.

If it is determined in step S68 that the necessary bandwidth can be secured, if it is determined in step S70 that the response frame has not been received, or if processing of step S71 has been performed, processing of step S72 is performed.

In step S72, the channel management unit 86 sets an available frequency channel of a non-limited frequency band as an operation channel on the basis of the operation band information and the necessary bandwidth information. That is, among frequency channels of the non-limited frequency band, a frequency channel that can be used for wireless communication is determined.

In step S73, the channel management unit 86 determines whether or not to use a limited frequency band, that is, whether or not to use a frequency channel of the limited frequency band as an operation channel.

For example, when an operation bandwidth equal to or greater than the bandwidth indicated by the necessary bandwidth information is secured by the operation channel set in step S72 or when the operation channel information of the operation band information indicates that limited frequency bands cannot be used, it is determined that the limited frequency bands are not used.

Further, for example, when the operation channel information of the operation band information indicates that limited frequency bands can be used although the bandwidth indicated by the necessary bandwidth information is not secured, it is determined that limited frequency bands are used.

If it is determined in step S73 that limited frequency bands are not used, operation channel setting processing ends. In this case, wireless communication is performed subsequently using only operation channels in non-limited frequency bands.

On the other hand, if it is determined in step S73 that limited frequency bands are used, the channel management unit 86 sets an available frequency channel of a limited frequency band as an operation channel on the basis of the operation band information and the necessary bandwidth information in step S74. That is, among frequency channels of limited frequency bands, a frequency channel that can be used for wireless communication is determined.

In step S75, the channel management unit 86 sets a use time limit of the operation channel in the limited frequency band set in step S74 on the basis of the operation band information.

When the operation channel and use time limit of the wireless communication device 41 serving as the communication terminal 11 are set in this manner, the wireless communication device 41 performs wireless communication according to the settings.

In step S76, the channel management unit 86 determines whether or not the use time limit of the operation channel in the limited frequency band has been exceeded on the basis of the use time limit set in step S75 and the current time information supplied from the information collection unit 85.

If it is determined in step S76 that the use time limit has not been exceeded, processing of step S76 is repeated until it is determined that the use time limit has been exceeded.

On the other hand, if it is determined in step S76 that the use time limit has been exceeded, it is necessary to newly set an operation channel, and thus processing returns to step S61 and the above-described processing is repeated.

As described above, the wireless communication device 41 appropriately requests the access point 12 to expand the operation band or obtains the operation band information from the access point 12 to set an operation channel at the time of performing wireless communication.

At this time, it is possible to realize more efficient and high-speed wireless communication by setting an operation channel using limited frequency bands as well as non-limited frequency bands as necessary.

### <Description of database access processing>

In addition, when the wireless communication device 41 operates as the communication terminal 11 or the access point 12, for example, the wireless communication device 41 may access the database server 14 to acquire available frequency time information.

Specifically, in operation band management processing described with reference to Fig. 15, for example, the database server 14 is accessed and available frequency time information is acquired in step S20.

Here, processing performed when the wireless communication device 41 accesses the database server 14 and acquires available frequency time information will be described in more detail with reference to the flowchart of Fig. 17.

That is, database access processing performed by the wireless communication device 41 will be described below with reference to the flowchart of Fig. 17.

In step S111, the channel management unit 86 obtains application information.

For example, when the wireless communication device 41 operates as the access point 12, application information is acquired from an association request of the communication terminal 11 connected to the network (BSS) of the wireless communication device 41, as in the case of step S14 of Fig. 15.

For example, when the wireless communication device 41 operates as the communication terminal 11, the channel management unit 86 acquires application information on an application executed by the wireless communication device 41 from the apparatus control module 53 via the information collection unit 85 and the interface 81.

In step S112, the channel management unit 86 determines whether or not the application indicated by the application information requires high-speed wireless communication on the basis of the application information acquired (acquired) in step S111.

For example, when the bandwidth necessary for the application indicated by the application information is equal to or greater than a predetermined threshold value, it is determined that high-speed wireless communication is required.

If it is determined in step S112 that high-speed wireless communication is not required, that is, if a narrow operation bandwidth is sufficient for wireless communication, it is not necessary to use a limited frequency band for wireless communication and thus database access processing ends.

On the other hand, if it is determined in step S112 that high-speed wireless communication is required, the channel management unit 86 calculates a bandwidth necessary to execute the application on the basis of the application information in step S113.

In step S114, the channel management unit 86 determines whether or not it is necessary to use limited frequency bands at the time of executing the application on the basis of the bandwidth calculated in step S113.

In determination processing in step S114, operation band information and operable bandwidth information held by the channel management unit 86 may also be referred to as necessary.

If it is determined in step S114 that limited frequency bands do not need to be used, database access processing ends.

On the other hand, if it is determined in step S114 that limited frequency bands need to be used, the information collection unit 85 acquires geographic location information indicating the current position of the wireless communication device 41 in step S115.

For example, the positioning timing module 56 acquires the geographic location information indicating the current position of the wireless communication device 41 by receiving a signal from the positioning satellite 15 and supplies the geographic location information to the information collection unit 85 via the interface 81.

When the information collection unit 85 acquires the geographic location information supplied in this manner, the information collection unit 85 supplies the geographic location information to the channel management unit 86.

In step S116, the channel management unit 86 determines whether or not the database server 14 can be accessed.

For example, if the channel management unit 86 does not hold or cannot acquire the address of the database server 14, it is determined that the database server 14 is not accessible.

If it is determined in step S116 that the database server 14 is not accessible, database access processing ends.

On the other hand, if it is determined in step S116 that the database server 14 is accessible, processing proceeds to step S117.

In this case, the channel management unit 86 generates the available frequency time information request shown in Fig. 13 on the basis of the address of the database server 14 and the geographic location information.

Then, the channel management unit 86 supplies the generated available frequency time information request to the network connection module 51 via the information collection unit 85, the interface 81, and the apparatus control module 53.

In step S117, the network connection module 51 transmits the available frequency time information request supplied from the channel management unit 86 to the database server 14 via the Internet or the like.

When the database server 14 transmits a notification frame of the available frequency time information to the wireless communication device 41 in response to the available frequency time information request transmitted in this manner, the network connection module 51 receives the transmitted notification frame.

Then, the network connection module 51 supplies the received notification frame, that is, the available frequency time information, to the channel management unit 86 via the apparatus control module 53, the interface 81, and the information collection unit 85.

In step S118, the channel management unit 86 determines whether or not there is a response to the available frequency time information request from the database server 14.

If it is determined in step S118 that there is no response, that is, if the available frequency time information is not transmitted, database access processing ends.

On the other hand, when it is determined in step S118 that there is a response, the channel management unit 86 obtains the available frequency time information by acquiring the available frequency time information supplied from the information collection unit 85 in step S119.

Accordingly, the available frequency time information shown in Fig. 14, for example, can be obtained. That is, information such as bitmap information indicating available frequency channels and a use time limit of the frequency channels indicated by the bitmap information can be obtained as the available frequency time information.

When the available frequency time information is obtained in this manner, database access processing ends.

As described above, the wireless communication device 41 appropriately accesses the database server 14 and acquires available frequency time information.

In this way, it is possible to appropriately use non-limited frequency bands and limited frequency bands in combination to realize more efficient and high-speed wireless communication.

In particular, even when the access point 12 cannot access the database server 14, the access point 12 can acquire available frequency time information if the wireless communication device 41 operating as the communication terminal 11 (station) accesses the database server 14.

### <Description of high-speed wireless communication processing>

Further, processing performed when the wireless communication device 41 performs high-speed wireless communication with another wireless communication device 41 to transmit and receive user data will be described.

That is, high-speed wireless communication processing performed by the wireless communication device 41 will be described below with reference to the flowchart of Fig. 18.

In step S151, the channel management unit 86 reads operation band information.

For example, the channel management unit 86 reads the operation band information updated and held in step S21 of Fig. 15. If operable bandwidth information or the like is held in addition to the operation band information, the operable bandwidth information or the like is also read appropriately. Although processing of step S151 is not performed when the operation band information is not held, if there is other information indicating an available frequency band or the like, such information is appropriately read.

For example, when the channel management unit 86 holds the operable bandwidth information obtained in step S67 of Fig. 16, the channel management unit 86 also reads the operable bandwidth information as necessary.

In addition, when the wireless communication device 41 operates as the communication terminal 11, for example, the channel management unit 86 also reads information (setting information) of operation channels of each frequency band set in steps S72 and S74 of Fig. 16 as necessary.

In step S152, the channel management unit 86 determines whether or not an application requiring high-speed wireless communication has been started on the basis of the held application information or the like.

For example, when the wireless communication device 41 operates as the access point 12, determination processing of step S152 is performed on the basis of the application information of the communication terminal 11 connected to the network (BSS) of the wireless communication device 41.

On the other hand, when the wireless communication device 41 operates as the communication terminal 11, determination processing of step S152 is performed on the application being executed thereby.

If it is determined in step S152 that the application requiring high-speed wireless communication has not been started, high-speed wireless communication is not required, and thus high-speed wireless communication processing ends.

On the other hand, if it is determined in step S152 that the application requiring high-speed wireless communication has been started, the channel management unit 86 calculates a bandwidth necessary for high-speed wireless communication performed with respect to the started application in step S153.

For example, the channel management unit 86 obtains a necessary bandwidth on the basis of the held application information, the necessary bandwidth information acquired in step S61 of Fig. 16, and the like.

In step S154, the channel management unit 86 determines whether or not the wireless communication device 41 operates as the communication terminal 11.

If it is determined in step S154 that the wireless communication device 41 does not operate as the communication terminal 11, that is, if it operates as the access point 12, processing proceeds to step S161.

On the other hand, if it is determined in step S154 that the wireless communication device 41 operates as the communication terminal 11, the channel management unit 86 obtains operable bandwidth information of the access point 12 in step S155.

For example, the channel management unit 86 reads operable bandwidth information that has already been extracted from a beacon signal or the like received from the access point 12 and held or obtained by newly receiving a beacon signal or the like in step S155.

Here, description is given on the assumption that, when the wireless communication device 41 operates as the communication terminal 11, that is, when it is determined in step S154 that the wireless communication device 41 operates as the communication terminal 11, the wireless communication device 41 has not yet obtained the operation band information.

In step S156, the channel management unit 86 determines whether or not setting with respect to a limited frequency band has already been performed on the basis of the operation channel setting information read in step S151 and the operable bandwidth information obtained in step S155.

For example in step S156, it is determined that setting with respect to a limited frequency band has been performed in a case where an operation channel is set in the limited frequency band, a case where the operable bandwidth information indicates that the limited frequency band is available, and the like.

If it is determined in step S156 that setting with respect to a limited frequency band has been performed, processing proceeds to step S161.

On the other hand, if it is determined in step S156 that setting with respect to a limited frequency band has not been performed yet, the channel management unit 86 determines in step S157 whether or not the database server 14 is accessible. For example, the same determination processing as in step S116 of Fig. 17 is performed in step S157.

If it is determined in step S157 that the database server 14 is not accessible, then processing proceeds to step S161.

On the other hand, if it is determined in step S157 that the database server 14 is accessible, the channel management unit 86 accesses the database server 14 in step S158 and acquires available frequency time information.

More specifically, for example, the same processing as database access processing described with reference to Fig. 17 is performed in step S158.

Further, the channel management unit 86 generates, on the basis of the obtained available frequency time information, a use time limit of the available frequency time information, available bandwidth information, bitmap information indicating available frequency channels, and the like, supplies the generated information to the transmission frame construction unit 84, and instructs generation of an available frequency time information frame.

Then, the transmission frame construction unit 84 generates the available frequency time information frame shown in Fig. 9 as a transmission frame on the basis of the information supplied from the channel management unit 86 and supplies the available frequency time information frame to the transmission signal processing unit 87.

Further, the channel management unit 86 controls transmission of the available frequency time information, that is, the available frequency time information frame to the access point 12 by the transmission signal processing unit 87.

The transmission signal processing unit 87 performs modulation processing and signal processing on the available frequency time information frame supplied from the transmission frame construction unit 84 according to control of the channel management unit 86 and supplies a signal obtained as a result of processing to the transmission/reception antenna unit 88.

In step S159, the transmission/reception antenna unit 88 notifies the access point 12 of the available frequency time information by transmitting the available frequency time information frame supplied from the transmission signal processing unit 87.

In step S160, the transmission/reception antenna unit 88 receives a response frame from the access point 12 for the available frequency time information frame.

If there is no response from the access point 12, that is, if the response frame is not transmitted, processing of step S160 is not performed.

Here, a response frame in which the operation band information shown in Fig. 10 is stored, for example, is received by the transmission/reception antenna unit 88 as a reception frame and is supplied to the channel management unit 86 via the reception signal processing unit 89 and the reception frame analysis unit 90.

Processing of step S161 is performed if processing of step S160 has been performed, if it is determined in step S157 that the database server 14 is not accessible, if it is determined in step S156 that setting with respect to a limited frequency band has not been performed, or if it is determined that the wireless communication device 41 does not operate as the communication terminal 11 in step S154.

In step S161, the channel management unit 86 acquires operation band information.

For example, when the response frame has been received in step S160, the channel management unit 86 acquires the operation band information stored in the response frame from the reception frame analysis unit 90 in step S161.

For example, in a case where the response frame has not been received in step S160, and the like, the channel management unit 86 uses, as operation band information, information indicating available frequency bands, such as operation band information that was acquired and held by the channel management unit 86 in the past, operation channel setting information, and operable bandwidth information.

Further, when the wireless communication device 41 operates as the access point 12, for example, the channel management unit 86 reads the operation band information held thereby.

In step S162, on the basis of the operation band information, the channel management unit 86 sets an operation channel of a non-limited frequency band to be used for wireless communication which will be actually performed from now on.

Specifically, the channel management unit 86 selects a plurality of consecutively arranged operation channels as operation channels to be actually used for wireless communication from among operation channels of non-limited frequency bands, for example, in accordance with the existing regulations regarding non-limited frequency bands.

In step S163, the channel management unit 86 determines whether or not the bandwidth is insufficient. For example, when the necessary bandwidth calculated in step S153 can be secured by the operation channel set in step S162, it is determined that the bandwidth is not insufficient in step S163.

If it is determined in step S163 that the bandwidth is not insufficient, then processing proceeds to step S167.

On the other hand, if it is determined in step S163 that the bandwidth is insufficient, the channel management unit 86 determines whether or not an operation channel in a limited frequency band can be set on the basis of the operation band information in step S164. That is, it is determined whether or not a limited frequency band can be used.

If it is determined in step S164 that an operation channel in a limited frequency band cannot be set, then processing proceeds to step S167. In this case, although a sufficient bandwidth cannot be secured, wireless communication is performed by using a set operation channel.

On the other hand, if it is determined in step S164 that an operation channel in a limited frequency band can be set, processing proceeds to step S165.

In step S165, on the basis of the operation band information, the channel management unit 86 sets operation channels of a limited frequency band to be used for wireless communication which will be actually performed from now on.

That is, the channel management unit 86 selects, for example, a plurality of consecutively arranged operation channels from among operation channels in a limited frequency band as operation channels to be actually used for wireless communication.

In step S166, the channel management unit 86 sets a use time limit of the operation channels selected in step S165 on the basis of the operation band information.

Processing of step S167 is performed if processing of step S166 has been performed, if it is determined that setting in a limited frequency band is not possible in step S164, or if it is determined that the bandwidth is not insufficient in step S163.

In step S167, the channel management unit 86 carries out high-speed data communication, that is, high-speed wireless communication.

Specifically, the transmission sequence management unit 83 receives the supply of necessary information from the channel management unit 86, performs sequence management of transmission data supplied from the transmission buffer 82, and supplies sequence management information and the transmission data to the transmission frame construction unit 84.

Further, the transmission frame construction unit 84 constructs (generates) a transmission frame in which the transmission data is stored on the basis of the sequence management information and transmission data supplied from the transmission sequence management unit 83 and supplies the transmission frame to the transmission signal processing unit 87.

The transmission signal processing unit 87 performs modulation processing and signal processing on the transmission frame supplied from the transmission frame construction unit 84 according to control of the channel management unit 86 and supplies a signal obtained as a result of processing to the transmission/reception antenna unit 88. The transmission/reception antenna unit 88 wirelessly transmits the transmission frame supplied from the transmission signal processing unit 87.

At this time, the channel management unit 86 controls the transmission signal processing unit 87 such that the transmission frame is transmitted using the operation channel set (selected) in step S162 or step S165.

That is, non-limited frequency bands and limited frequency bands are appropriately used in combination and a plurality of operation channels are bundled to realize high-speed wireless communication in which a sufficient bandwidth is used.

Such a method of bundling a plurality of operation channels for wireless communication is called channel bonding, carrier aggregation or the like.

Further, a transmission frame transmitted from another wireless communication device 41 as a communication partner is appropriately received as a reception frame in step S167.

In step S168, the channel management unit 86 determines whether or not the use time limit set in step S166 has expired on the basis of current time information supplied from the information collection unit 85.

If it is determined in step S168 that the use time limit has expired, high-speed wireless communication processing ends.

On the other hand, if it is determined in step S168 that the use time limit has not expired, the channel management unit 86 determines in step S169 whether or not the operation of the application has ended.

If it is determined in step S169 that the operation of the application has not ended, processing returns to step S167 and the above-described processing is repeated.

On the other hand, if it is determined in step S169 that the operation of the application has ended, high-speed wireless communication processing ends.

As described above, the wireless communication device 41 appropriately accesses the database server 14 to acquire available frequency time information, sets operation channels in non-limited frequency bands and limited frequency bands within a range of frequency bands indicated by the operation band information, and performs wireless communication.

At this time, it is possible to realize more efficient and high-speed wireless communication by setting an operation channel using limited frequency bands as well as non-limited frequency bands as necessary.

### <Example of allocation of operation channels>

Here, an example of allocating operation channels used by the wireless communication device 41, that is, an example of setting operation channels will be described with reference to Fig. 19 to Fig. 30.

In Fig. 19 to Fig. 30, a part protruding upward in the figure represents a single frequency channel, and the horizontal direction in the figure indicates frequency. In particular, a shaded frequency channel indicates an operation channel.

In the example of Fig. 19, a limited frequency band that is limited in use and a non-limited frequency band that can be freely used without restrictions are combined to continuously use frequency channels having a predetermined bandwidth.

That is, an example in which 12 channels of the UNII-5 band of 6 GHz band A, which is a limited frequency band, and 4 channels of the UNII-6 band of 6 GHz band B, which is a non-limited frequency band, are combined to use a maximum bandwidth of 320 MHz using a total of 16 channels is shown here.

Fig. 20 shows an example in which a limited frequency band and a non-limited frequency band are combined to continuously use frequency channels having a predetermined bandwidth.

That is, an example in which 11 channels of the UNII-5 band of 6 GHz band A, which is a limited frequency band, and 5 channels of the UNII-6 band of 6 GHz band B, which is a non-limited frequency band, are combined to use a maximum bandwidth of 320 MHz using a total of 16 channels is shown here.

Fig. 21 shows an example in which a limited frequency band and a non-limited frequency band are combined to continuously use frequency channels having a predetermined bandwidth.

That is, an example in which 3 channels of the UNII-7 band of 6 GHz band C, which is a limited frequency band, 12 channels of the UNII-8 band of 6 GHz band D, which is a non-limited frequency band, and 1 channel corresponding to the boundary of the UNII-7 band and the UNII-8 band are combined to use a maximum bandwidth of 320 MHz using a total of 16 channels is shown here.

Fig. 22 shows an example in which a limited frequency band and a non-limited frequency band are combined to use frequency channels having a predetermined bandwidth in a discrete manner.

That is, an example in which 8 channels of the UNII-5 band of 6 GHz band A, which is a limited frequency band, and 8 channels of the UNII-8 band of 6 GHz band D, which is a non-limited frequency band, are combined to use a maximum bandwidth of 320 MHz using a total of 16 channels is shown here.

Fig. 23 shows an example in which a limited frequency band and a non-limited frequency band are combined to use frequency channels having a predetermined bandwidth in a discrete manner.

That is, an example in which 12 channels of the UNII-7 band of 6 GHz band C, which is a limited frequency band, and 4 channels of 5 GHz band D, which is a non-limited frequency band, are combined to use a maximum bandwidth of 320 MHz using a total of 16 channels is shown here.

Fig. 24 shows an example in which a limited frequency band and a non-limited frequency band are combined to use frequency channels having a predetermined bandwidth in a discrete manner.

That is, an example in which 8 channels of 5 GHz band A, which is a non-limited frequency band, 5 channels of the UNII-6 band of 6 GHz band B, and 3 channels of the UNII-5 of 6 GHz band A, which is a limited frequency band, are combined to use a maximum bandwidth of 320 MHz using a total of 16 channels is shown here.

Fig. 25 shows an example in which a limited frequency band and a non-limited frequency band are combined to use frequency channels having a predetermined bandwidth in a discrete manner.

That is, an example in which 4 channels of the UNII-7 band of 6 GHz band C, which is a limited frequency band, 4 channels of the UNII-6 band of 6 GHz band B, which is a non-limited frequency band, 4 channels of 5 GHz band A, and 4 channels of 5 GHz band B are combined to use a maximum bandwidth of 320 MHz using a total of 16 channels is shown here.

Fig. 26 shows an example in which a limited frequency band and a non-limited frequency band are combined to use frequency channels having a predetermined bandwidth in a discrete manner.

That is, an example in which 14 channels of the UNII-5 band of 6 GHz band A, which is a limited frequency band, and 2 channels of a 2.4 GHz band, which is a non-limited frequency band, are combined to use a maximum bandwidth of 320 MHz using a total of 16 channels is shown here.

Fig. 27 shows an example in which a limited frequency band and a non-limited frequency band are combined to use frequency channels having a predetermined bandwidth in a discrete manner.

That is, an example in which 1 channel of the UNII-7 band of 6 GHz band C, which is a limited frequency band, a channel of a 2.4 GHz band, which is a non-limited frequency band, 4 channels of 5 GHz band A, 4 channels of 5 GHz band B, 2 channels of the UNII-6 band of 6 GHz band B, and 4 channels of the UNII-8 band of 6 GHz band D are combined to use a maximum bandwidth of 320 MHz using a total of 16 channels is shown here.

Fig. 28 shows an example of using frequency channels having a predetermined bandwidth in a non-limited frequency band in a discrete manner while avoiding use of a limited frequency band.

That is, an example in which 4 channels of the UNII-6 band of 6 GHz band B, which is a non-limited frequency band, and 12 channels of the UNII-8 band of 6 GHz band D are combined to use a maximum bandwidth of 320 MHz using a total of 16 channels is shown here.

Fig. 29 shows an example of using frequency channels having a predetermined bandwidth in a non-limited frequency band in a discrete manner while avoiding use of a limited frequency band.

That is, an example in which 5 channels of the UNII-6 band of 6 GHz band B, which is a non-limited frequency band, and 11 channels of 5 GHz band B are combined to use a maximum bandwidth of 320 MHz using a total of 16 channels is shown here.

Fig. 30 shows an example in which frequency channels having a predetermined bandwidth are used in a discrete manner by using only a limited frequency band.

That is, an example in which 3 blocks of 4 channels of the UNII-5 band of 6 GHz band A (a total of 12 channels) and 4 channels of the UNII-7 band of 6 GHz band C, which are limited frequency bands, are combined to use a maximum bandwidth of 320 MHz using a total of 16 channels is shown here.

### <Example of configuration of computer>

The above-described series of processing can also be performed by hardware or software. In the case where the series of processes is executed by software, a program that configures the software is installed on a computer. Here, the computer includes, for example, a computer built in dedicated hardware, a general-purpose personal computer on which various programs are installed to be able to execute various functions, and the like.

Fig. 31 is a block diagram showing an example of a configuration of hardware of a computer that executes a program to perform the above-described series of processing.

In the computer, a central processing unit (CPU) 501, a read-only memory (ROM) 502, and a random access memory (RAM) 503 are connected to each other by a bus 504. The CPU 501 may be a processor such as a microprocessor or a processing circuit.

An input/output interface 505 is further connected to the bus 504. An input unit 506, an output unit 507, a recording unit 508, a communication unit 509, and a drive 510 are connected to the input/output interface 505.

The input unit 506 is a keyboard, a mouse, a microphone, an imaging element, or the like. The output unit 507 is a display, a speaker, or the like. The recording unit 508 is a hard disk, a nonvolatile memory, or the like. The communication unit 509 is a network interface or the like. The drive 510 drives a removable medium 511 such as a magnetic disk, an optical disc, a magneto-optical disk, or a semiconductor memory.

In the computer that has the aforementioned configuration, for example, the CPU 501 loads a program stored in the recording unit 508 to the RAM 503 via the input/output interface 505 and the bus 504 and executes the program to perform the above-described series of processing.

The program executed by the computer (the CPU 501) can be recorded on, for example, the removable medium 511 serving as a package medium for supply. The program can be supplied via a wired or wireless transfer medium such as a local area network, the Internet, or digital satellite broadcasting.

In the computer, by mounting the removable medium 511 on the drive 510, it is possible to install the program in the recording unit 508 via the input/output interface 505. Further, the program can be received by the communication unit 509 via a wired or wireless transfer medium to be installed in the recording unit 508. In addition, the program can be installed in advance in the ROM 502 or the recording unit 508.

The program executed by the computer may be a program that performs processing chronologically in the order described in the present specification or may be a program that performs processing in parallel or at a necessary timing such as a calling time.

Embodiments of the present technology are not limited to the above-described embodiments and can be changed variously within the scope of the present technology without departing from the gist of the present technology.

For example, the present technology can be configured as cloud computing in which one function is shared and processed in common by a plurality of devices via a network.

Further, the respective steps described in the above-described flowcharts can be executed by one device or in a shared manner by a plurality of devices.

Furthermore, in a case where a plurality of kinds of processing are included in a single step, the plurality of kinds of processing included in the single step may be executed by one device or by a plurality of devices in a shared manner.

Furthermore, the present technology can be configured as follows.

(1) A wireless communication device including a first transmission unit configured to transmit signals using frequency channels of a freely available non-limited frequency band,
   a second transmission unit configured to transmit signals using frequency channels of a limited frequency band that is limited in use, and
   a control unit configured to control operations of the first transmission unit and the second transmission unit such that wireless communication is performed within a predetermined operation bandwidth by using frequency channels of the non-limited frequency band and frequency channels of the limited frequency band in combination.
(2) The wireless communication device according to (1), further including an information collection unit configured to acquire available information indicating whether or not the limited frequency band is available at a position of the wireless communication device by transmitting geographic location information indicating the position of the wireless communication device to a server.
(3) The wireless communication device according to (2), wherein the available information includes frequency information indicating frequencies of the limited frequency band available at the position.
(4) The wireless communication device according to (3), wherein the available information includes time information indicating a time zone in which the frequencies indicated by the frequency information are available.
(5) The wireless communication device according to any one of (2) to (4), wherein the control unit determines frequency channels of the limited frequency band available for the wireless communication based on the available information.
(6) The wireless communication device according to (5), wherein the control unit controls transmission of operation band information indicating the frequency channels of the limited frequency band available for the wireless communication to another wireless communication device.
(7) The wireless communication device according to (6), wherein the control unit controls periodic transmission of the operation band information to the other wireless communication device.
(8) The wireless communication device according to any one of (2) to (4), wherein the control unit controls transmission of the available information to an access point.
(9) The wireless communication device according to any one of (1) to (4), further including a reception unit configured to receive the operation band information indicating the available frequency channels of the limited frequency band, wherein the control unit determines frequency channels of the limited frequency band used for the wireless communication on the basis of the operation band information.
(10) The wireless communication device according to any one of (1) to (9), wherein the predetermined operation bandwidth is 320 MHz.
(11) The wireless communication device according to any one of (1) to (10), wherein the first transmission unit and the second transmission unit transmit signals using one or more frequency channels having a bandwidth of 20 MHz.
(12) The wireless communication device according to any one of (1) to (11), wherein bandwidths used for the wireless communication are different in the non-limited frequency band and the limited frequency band.
(13) The wireless communication device according to any one of (1) to (12), wherein the non-limited frequency band is a 6 GHz band.
(14) The wireless communication device according to any one of (1) to (12), wherein the non-limited frequency band is a 2.4 GHz band or a 5 GHz band.
(15) A wireless communication method, by a wireless communication device including a first transmission unit configured to transmit signals using frequency channels of a freely available non-limited frequency band and a second transmission unit configured to transmit signals using frequency channels of a limited frequency band that is limited in use, including
   controlling operations of the first transmission unit and the second transmission unit such that wireless communication is performed within a predetermined operation bandwidth by using frequency channels of the non-limited frequency band and frequency channels of the limited frequency band in combination.
(16) A program causing a computer configured to control a wireless communication device including a first transmission unit configured to transmit signals using frequency channels of a freely available non-limited frequency band and a second transmission unit configured to transmit signals using frequency channels of a limited frequency band that is limited in use to execute processing including a step of
   controlling operations of the first transmission unit and the second transmission unit such that wireless communication is performed within a predetermined operation bandwidth by using frequency channels of the non-limited frequency band and frequency channels of the limited frequency band in combination.

### [Reference Signs List]

- 11: Communication terminal
- 12: Access point
- 14: Database server
- 41: Wireless communication device
- 85: Information collection unit
- 86: Channel management unit
- 87-1 to 87-4, 87: Transmission signal processing unit
- 89-1 to 89-4, 89: Reception signal processing unit

## Claims

1. A wireless communication device comprising: a first transmission unit configured to transmit signals using frequency channels of a freely available non-limited frequency band;
a second transmission unit configured to transmit signals using frequency channels of a limited frequency band that is limited in use, and
a control unit configured to control operations of the first transmission unit and the second transmission unit such that wireless communication is performed within a predetermined operation bandwidth by using frequency channels of the non-limited frequency band and frequency channels of the limited frequency band in combination.

2. The wireless communication device according to claim 1, further comprising an information collection unit configured to acquire available information indicating whether or not the limited frequency band is available at a position of the wireless communication device by transmitting geographic location information indicating the position of the wireless communication device to a server.

3. The wireless communication device according to claim 2, wherein the available information includes frequency information indicating frequencies of the limited frequency band available at the position.

4. The wireless communication device according to claim 3, wherein the available information includes time information indicating a time zone in which the frequencies indicated by the frequency information are available.

5. The wireless communication device according to claim 2, wherein the control unit determines frequency channels of the limited frequency band available for the wireless communication based on the available information.

6. The wireless communication device according to claim 5, wherein the control unit controls transmission of operation band information indicating the frequency channels of the limited frequency band available for the wireless communication to another wireless communication device.

7. The wireless communication device according to claim 6, wherein the control unit controls periodic transmission of the operation band information to the other wireless communication device.

8. The wireless communication device according to claim 2, wherein the control unit controls transmission of the available information to an access point.

9. The wireless communication device according to claim 1, further comprising a reception unit configured to receive the operation band information indicating the available frequency channels of the limited frequency band,
wherein the control unit determines frequency channels of the limited frequency band used for the wireless communication on the basis of the operation band information.

10. The wireless communication device according to claim 1, wherein the predetermined operation bandwidth is 320 MHz.

11. The wireless communication device according to claim 1, wherein the first transmission unit and the second transmission unit transmit signals using one or more frequency channels having a bandwidth of 20 MHz.

12. The wireless communication device according to claim 1, wherein bandwidths used for the wireless communication are different in the non-limited frequency band and the limited frequency band.

13. The wireless communication device according to claim 1, wherein the non-limited frequency band is a 6 GHz band.

14. The wireless communication device according to claim 1, wherein the non-limited frequency band is a 2.4 GHz band or a 5 GHz band.

15. A wireless communication method, by a wireless communication device including a first transmission unit configured to transmit signals using frequency channels of a freely available non-limited frequency band and a second transmission unit configured to transmit signals using frequency channels of a limited frequency band that is limited in use, including
controlling operations of the first transmission unit and the second transmission unit such that wireless communication is performed within a predetermined operation bandwidth by using frequency channels of the non-limited frequency band and frequency channels of the limited frequency band in combination.

16. A program causing a computer configured to control a wireless communication device including a first transmission unit configured to transmit signals using frequency channels of a freely available non-limited frequency band and a second transmission unit configured to transmit signals using frequency channels of a limited frequency band that is limited in use to execute processing including a step of
controlling operations of the first transmission unit and the second transmission unit such that wireless communication is performed within a predetermined operation bandwidth by using frequency channels of the non-limited frequency band and frequency channels of the limited frequency band in combination.
